# EUROPEAN PATENT APPLICATION

(11) **EP 4 738 059 A1**
(43) Date of publication of application: **06.05.2026**
(21) Application number: 25743682.4
(22) Date of filing: 11.06.2025
(51) Int. Cl.: G06F 1/16, F16C 11/04, F16H 53/02

(54) **HINGE ASSEMBLY AND FOLDABLE ELECTRONIC DEVICE INCLUDING SAME**

(30) Priority: 30.08.2024 KR 20240118048; 15.10.2024 KR 20240140514
(71) Applicant: Samsung Electronics Co., Ltd, Suwon-si, Gyeonggi-do 16677 (KR)
(72) Inventor: KIM, Jongkeun, Suwon-si, Gyeonggi-do 16677 (KR); SEO, Wonyoung, Suwon-si, Gyeonggi-do 16677 (KR); SEO, Hyeonseok, Suwon-si, Gyeonggi-do 16677 (KR); LEE, Jinju, Suwon-si, Gyeonggi-do 16677 (KR)
(74) Representative: Gulde & Partner
(86) International application number: PCT/KR2025/007980
(87) International publication number: WO 2026/049225

(57) **Abstract**

A hinge assembly including a first arm member connected to a first shaft, a second arm member connected to a second shaft, a first interlocking gear including a third cam structure, a second interlocking gear including a fourth cam structure, a third shaft connected to the first interlocking gear, a fourth shaft connected to the second interlocking gear, a first cam member disposed in the first direction in the first interlocking gear and the second interlocking gear, at least one bracket connected to at least one of the first shaft, the second shaft, the third shaft, and the fourth shaft, a first elastic assembly configured to press the first cam member in a second direction opposite to the first direction so that contacts between the first cam member and the third cam structure and the fourth cam structure are maintained, and a second elastic assembly configured to press the third shaft and the fourth shaft in the first direction so that the contacts are maintained is disclosed.

## Description

### [Technical Field]

Embodiments disclosed herein relate to a hinge assembly and a foldable electronic device including the same.

### [Background Art]

Electronic devices have to be able to provide a large screen when in use for ease of operation and viewing, and may be reduced in size by folding and so on when not in use for easy portability. As an example, an electronic device may be configured to be foldable for easy portability via a hinge assembly, and may provide a large screen when unfolded by including a flexible display. In addition, the electronic device may provide various folding angles to improve usability. For example, the hinge assembly may be configured so that an angle formed by two housings may be maintained within a predetermined range. In a folded state of the electronic device, the display may have its layout adjusted to correspond to the folding angle, thereby providing various usage environments.

The aforementioned information may be provided as the related art to aid in understanding the present disclosure. No claim or determination is made as to whether any of the above matters constitutes the related art regarding to the present disclosure.

### [Disclosure]

### [Technical Solution]

A hinge assembly 240, 240-1 according to an embodiment of the disclosure includes a first arm member 410 fastened to a first shaft 131 extending in a first direction and including a first main gear 171 including a first cam structure 450, a second arm member 420 fastened to a second shaft 132 extending in the first direction and including a second main gear 172 including a second cam structure 470, a first interlocking gear 1731 engaging with the first main gear 171 and including a third cam structure 1791, a second interlocking gear 1732 engaging with the second main gear 172 and including a fourth cam structure 1792, a third shaft 133 coupled to the first interlocking gear 1731 and formed parallel to the first shaft 131, a fourth shaft 134 coupled to the second interlocking gear 1732 and formed parallel to the second shaft 132, a first cam member 560 at least partially penetrated by the third shaft 133 and the fourth shaft 134 and disposed in the first direction in the first interlocking gear 1731 and the second interlocking gear 1732 to face the third cam structure 1791 and the fourth cam structure 1792, at least one bracket 610, 630, 650, 270 coupled to at least one of the first shaft 131, the second shaft 132, the third shaft 133, and the fourth shaft 134, a first elastic assembly 110 configured to press the first cam member 560 in a second direction opposite to the first direction so that contact between the first cam member 560 and the third cam structure 1791 and contact between the first cam member 560 and the fourth cam structure 1792 are maintained, and a second elastic assembly 120 configured to press the third shaft 133 and the fourth shaft 134 in the first direction so that contact between the first cam member 560 and the third cam structure 1791 and contact between the first cam member 560 and the fourth cam structure 1792 are maintained.

A foldable electronic device according to an embodiment of the disclosure includes at least one hinge assembly, a first housing and a second housing formed to be foldable around the at least one hinge assembly. The at least one hinge assembly includes a first arm member 410 fastened to a first shaft 131 extending in a first direction and including a first main gear 171 including a first cam structure 450, a second arm member 420 fastened to a second shaft 132 extending in the first direction and including a second main gear 172 including a second cam structure 470, a first interlocking gear 1731 engaging with the first main gear 171 and including a third cam structure 1791, a second interlocking gear 1732 engaging with the second main gear 172 and including a fourth cam structure 1792, a third shaft 133 coupled to the first interlocking gear 1731 and formed parallel to the first shaft 131, a fourth shaft 134 coupled to the second interlocking gear 1732 and formed parallel to the second shaft 132, a first cam member 560 at least partially penetrated by the third shaft 133 and the fourth shaft 134 and disposed in the first direction in the first interlocking gear 1731 and the second interlocking gear 1732 to face the third cam structure 1791 and the fourth cam structure 1792, at least one bracket 610, 630, 650, 270 coupled to at least one of the first shaft 131, the second shaft 132, the third shaft 133, and the fourth shaft 134, a first elastic assembly 110 configured to press the first cam member 560 in a second direction opposite to the first direction so that contact between the first cam member 560 and the third cam structure 1791 and contact between the first cam member 560 and the fourth cam structure 1792 are maintained, and a second elastic assembly 120 configured to press the third shaft 133 and the fourth shaft 134 in the first direction so that contact between the first cam member 560 and the third cam structure 1791 and contact between the first cam member 560 and the fourth cam structure 1792 are maintained.

### [Description of Drawings]

FIG. 1A is a front perspective view of an electronic device according to an embodiment.
FIG. 1B is a rear plan view of the electronic device according to an embodiment.
FIG. 2 is a partial exploded perspective view of the electronic device of FIGS. 1A and 1B including a hinge device, according to an embodiment.
FIG. 3A is a perspective view illustrating an example of a hinge assembly of an electronic device, according to an embodiment.
FIG. 3B is a view illustrating an example of a coupled form of the hinge assembly and a hinge housing of the electronic device, according to an embodiment.
FIG. 4 is a plan view illustrating an example of the hinge assembly of the electronic device, according to an embodiment.
FIG. 5 is an exploded perspective view illustrating an example of the hinge assembly of the electronic device, according to an embodiment.
FIG. 6 is a cross-sectional view illustrating an example of a hinge assembly including a movement prevention structure, according to an embodiment.
FIG. 7 is a view illustrating an example of a first arm member, according to an embodiment.
FIG. 8 is a view illustrating an example of a gear bracket included in the movement prevention structure, according to an embodiment.
FIG. 9 is a view illustrating an example of an interlocking gear of the hinge assembly, according to an embodiment.
FIG. 10 is a view illustrating an example of a cam member of the hinge assembly, according to an embodiment.
FIG. 11 is a view illustrating an example of a shaft bracket included in the movement prevention structure, according to an embodiment.
FIG. 12 is a view illustrating an example of a shaft of the hinge assembly, according to an embodiment.
FIG. 13 is a perspective view illustrating a coupling relationship between components of the movement prevention structure and the hinge assembly, according to an embodiment.
FIG. 14 is a view illustrating an example of a state in which a force is transmitted to the movement prevention structure in a first direction, according to an embodiment.
FIG. 15 is a view illustrating an example of a state in which a force is transmitted to the movement prevention structure in a second direction, according to an embodiment.
FIG. 16A is a view illustrating an example of a hinge assembly of an electronic device, according to an embodiment.
FIG. 16B is a view illustrating an example of a hinge assembly of an electronic device, according to an embodiment.
FIG. 17 is a view illustrating an example of a hinge assembly in an unfolded state of an electronic device, according to an embodiment.
FIG. 18 is a view illustrating an example of the hinge assembly in a partially folded state of the electronic device, according to an embodiment.
FIG. 19 is a view illustrating an example of a hinge assembly in a fully folded state of an electronic device, according to an embodiment.

With respect to the description of the drawings, the same or similar reference signs may be used for the same or similar elements.

### [Mode for Invention]

Hereinafter, various embodiments disclosed in the present disclosure will be described with reference to the accompanying drawings. However, this is not intended to limit the present disclosure to the specific embodiments, and it is to be construed to include various modifications, equivalents, and/or alternatives of embodiments of the present disclosure.

An electronic device according to an embodiment disclosed herein is a foldable electronic device formed to be foldable around at least one hinge assembly, and may include an electronic device such as a smartphone, a tablet, or a laptop. The hinge assembly of the electronic device according to an embodiment may include a plurality of operatively interlocking components to implement natural movement during folding and/or unfolding of the electronic device.

The electronic device according to an embodiment may further include a separate member (e.g., a bracket) or structure (e.g., an elastic body) in order to prevent a clearance and resulting movement of the components that occur due to dimensional deviation and/or assembly deviation of a plurality of components included in the hinge assembly. For example, the dimensional deviation may occur in an interlocking gear (e.g., an idler gear) configured to allow two housings to rotate in conjunction with each other to be foldable and/or unfoldable around the hinge assembly. Considering that the trend toward miniaturization of electronic devices may lead to the formation of frictional configurations (e.g., a cam shape) in interlocking gears, the dimensional deviation in the interlocking gear may result in loss of contact between the cam shape of the interlocking gear and a cam member of the hinge assembly. Therefore, a configuration or structure capable of eliminating the dimensional deviation of the interlocking gear may be required to uniformly maintain the frictional force of the hinge assembly so that the electronic device may stably maintain a folded state.

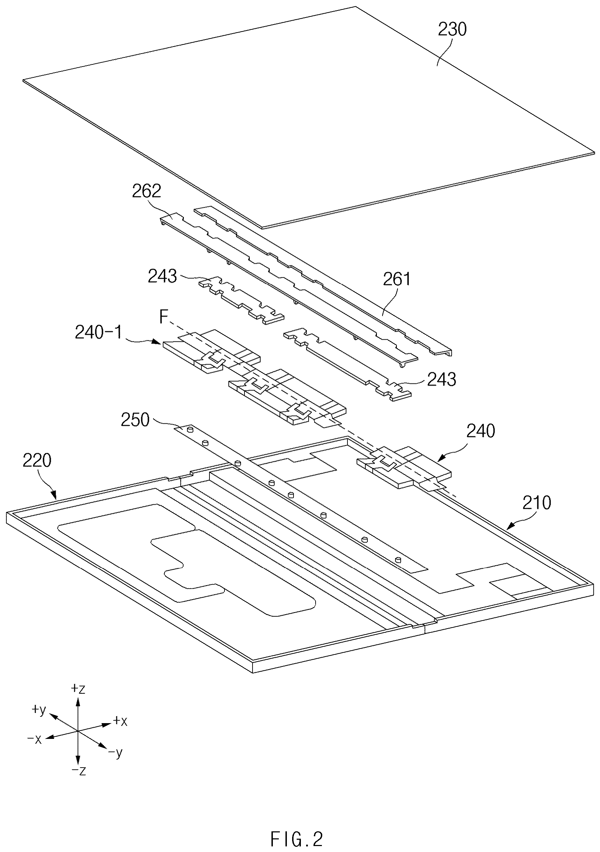

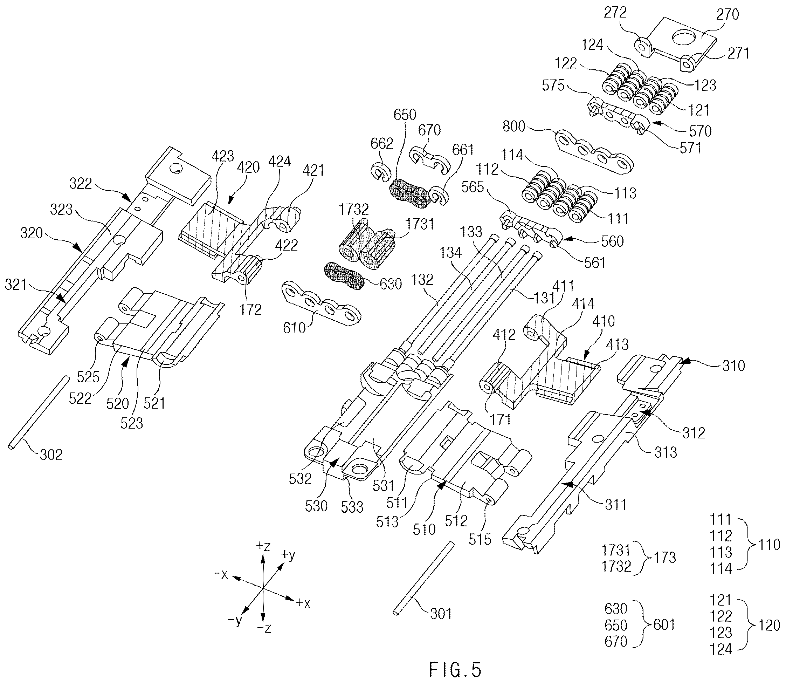

According to an embodiment disclosed herein, a hinge assembly (e.g., a hinge assembly 240 and/or 240-1 in FIG. 2) of an electronic device may include a movement prevention structure (e.g., a movement prevention structure 601 in FIG. 5) configured to prevent occurrence of dimensional deviation of an interlocking gear (e.g., a first interlocking gear 1731 and a second interlocking gear 1732 in FIG. 5). For example, the movement prevention structure 601 may include at least one bracket (e.g., a second gear bracket 630 and a second shaft bracket 650 in FIG. 5) and a fixing member 670.

Other purposes and effects of an electronic device including an improved hinge assembly according to various embodiments will become apparent in the following detailed description.

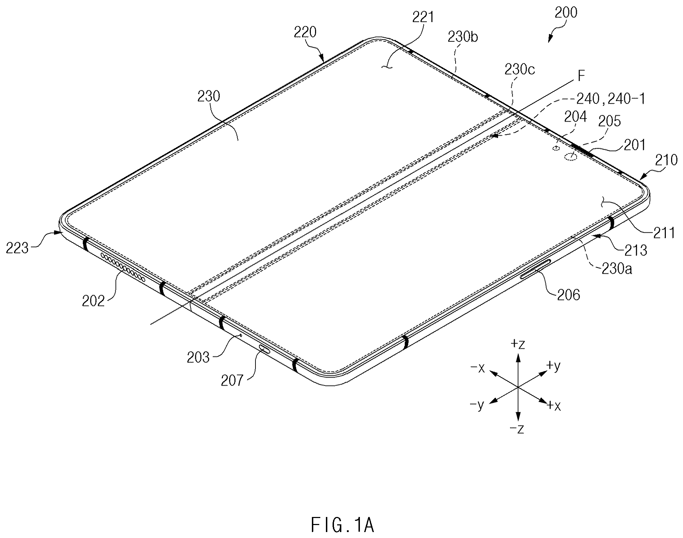

FIG. 1A is a front perspective view of an electronic device according to an embodiment.

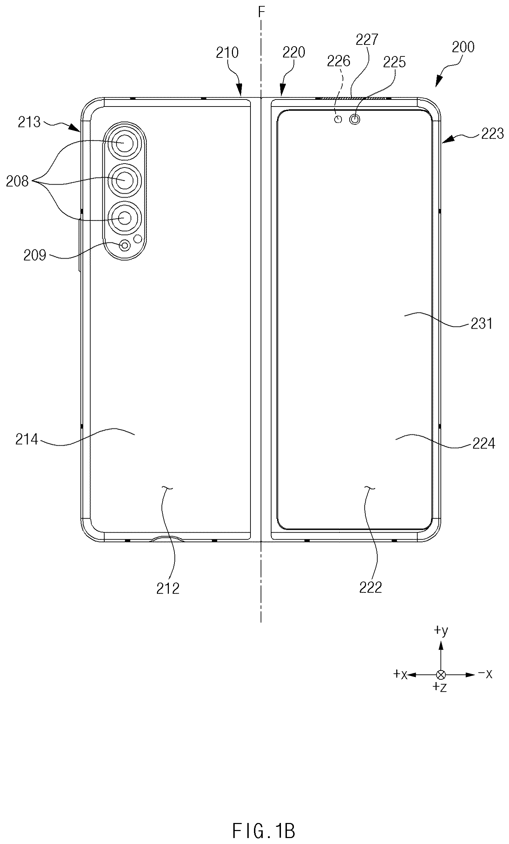

FIG. 1B is a rear plan view of the electronic device according to an embodiment.

Referring to FIGS. 1A and 1B, in an embodiment, an electronic device 200 (e.g., a foldable electronic device) may include a first housing 210 (e.g., a first housing structure) including a first side member 213 (e.g., a side bezel) and a second housing 220 (e.g., a second housing structure) including a second side member 223 (e.g., a side bezel), which are foldably coupled to each other with respect to a folding axis F through at least one hinge assembly 240 and/or 240-1 (e.g., a hinge structure, a hinge module, or a hinge device). For example, the first housing 210 and the second housing 220 may be configured as foldable housings (e.g., housing structures). For example, the electronic device 200 may include a first display 230 (e.g., a flexible display, a foldable display, or a main display) disposed to be supported by the first housing 210 and the second housing 220. For example, the first housing 210 may include a first surface 211 and a second surface 212 facing in an opposite direction (e.g., in a -z-axis direction) of the first surface 211. For example, the second housing 220 may include a third surface 221 and a fourth surface 222 facing in an opposite direction (e.g., in the - z-axis direction) of the third surface 221. For example, the first housing 210 may include a first rear cover 214 coupled to a first side member 213. For example, the second housing 220 may include a second rear cover 224 coupled to the second side member 223. For example, when the electronic device 200 is in a fully unfolded first state (e.g., an unfolded state or an unfolding state), the first surface 211 and the third surface 221 may be operated so that they face substantially the same direction (e.g., a +z-axis direction). For example, when the electronic device 200 is in a fully folded second state (e.g., a folded state or a folding state), the first surface 211 and the third surface 221 may be operated so that they face each other or face in opposite directions. For example, the electronic device 200 may be operated to maintain a third state (e.g., an intermediate state) between the first state and the second state.

According to an embodiment, the electronic device 200 may include a first receiver 201, at least one first sensor module 204 (e.g., a light sensor) and/or at least one first camera module 205 (e.g., an under display camera (UDC)) disposed on the first surface 211 of the first housing 210. For example, the electronic device 200 may include at least one key 206 disposed on the first side member 213. For example, the electronic device 200 may include at least one second camera module 208 and/or flash 209 disposed on the second surface 212 of the first housing 210 (e.g., the first rear cover 214). For example, the electronic device 200 may include a second display 231 disposed on the fourth surface 222 of the second housing 220, at least one third camera module 225 (e.g., an under display camera (UDC)), at least one second sensor module 226, and/or a second receiver 227. For example, the second display 231 may be disposed to be visible from the outside through at least a portion of the second rear cover 224. For example, the electronic device 200 may include a speaker 202 disposed on the second side member 223, a microphone 203 disposed on the first side member 213, and/or a connector port 207. At least some of the components described above may be re-disposed in the first housing 210 and/or the second housing 220.

According to an embodiment, the first display 230 (e.g., a flexible display) may include a first region 230a (e.g., a first planar portion) corresponding to at least a portion of the first surface 211, a second region 230b (e.g., a second planar portion) corresponding to at least a portion of the third surface 221, and a third region 230c (e.g., a flexible portion) that connects the first region 230a and the second region 230b and is deformable in the second state (e.g., a folded state) and/or the third state of the electronic device 200. For example, the third region 230c may be disposed at a position that at least partially overlaps at least one hinge assembly 240 and/or 240-1 when the first display 230 is viewed from above (e.g., in the +z-axis direction). For example, the first display 230 may be disposed so that the first surface 211 and the third surface 221 face each other in the second state so that they are not visible from the outside (e.g., an inward-fold type). For example, the first display 230 may be disposed to be visible from the outside in the second state so that the first surface 211 and the third surface 221 face in opposite directions (e.g., an outward-fold type).

FIG. 2 is a partial exploded perspective view of the electronic device of FIGS. 1A and 1B including a hinge device, according to an embodiment.

Referring to FIG. 2, in an embodiment, the electronic device (e.g., the electronic device 200 in FIG. 1A) may include at least one hinge assembly 240 and/or 240-1 (e.g., a hinge structure, a hinge module, or a hinge device) connecting the first housing 210 and the second housing 220 under the first display 230 (e.g., in the -z-axis direction). For example, the at least one hinge assembly 240 and/or 240-1 may include a first hinge assembly 240 and a second hinge assembly 240-1 spaced apart from the first hinge assembly 240 in a direction parallel to the folding axis F (e.g., in a ±y-axis direction). For example, the at least one hinge assembly 240 and/or 240-1 may be disposed between the first housing 210 and the second housing 220 to be invisible from the outside through a hinge housing 250 (e.g., a hinge cover).

When the electronic device 200 is in the folded state, a folded region (e.g., the third region 230c in FIG. 1A) (e.g., the folding region) of the first display 230 may be formed into a shape of a water drop (e.g., a dumbbell shape) to which gravity is applied, thereby providing assistance in ensuring a folding curvature that prevents cracking or buckling in the folded region of the first display 230. In addition, by disposing the dumbbell-shaped display folded region within a certain space of the housings 210 and 220, a gap between the housings 210 and 220 that are disposed to face each other when the electronic device 200 is in the folded state and have an 11-shaped disposed state may be reduced. In this way, by reducing the gap between the housings 210 and 220 in the folded state, the electronic device 200 may reduce the overall size of the electronic device 200 and block or reduce foreign substances from entering between the housings 210 and 220.

According to an embodiment, the electronic device may include at least one center bar 243 disposed between the display 230 and the hinge assemblies 240 and 240-1. The center bar 243 may be disposed to cover at least a portion of a center region of at least one of the first hinge assembly 240 and the second hinge assembly 240-1. As one example, the center bar 243 may be disposed to cover at least a portion of the center region of each of the first hinge assembly 240 and the second hinge assembly 240-1. The center bar 243 may be fastened and fixed to at least one of the hinge housing 250 and the hinge assemblies 240 and 240-1.

Wing plates 261 and 262 are disposed to be coupled to at least one hinge assembly 240 and/or 240-1 to cover at least a portion of a surface of the at least one hinge assembly 240 and/or 240-1 in a +z-axis direction when the electronic device 200 is in the unfolded state. The wing plates 261 and 262 are provided in a separate form from the housings 210 and 220. Accordingly, a gap may be formed between the wing plates 261 and 262 and the housings 210 and 220. The wing plates 261 and 262 may be disposed on both sides of the center bar 243 lying therebetween. For example, a first wing plate 261 may be positioned in a +x-axis direction with respect to the center bar 243, and a second wing plate 262 may be positioned in a-x-axis direction with respect to the center bar 243. The wing plates 261 and 262 may be disposed at the same height as the center bar 243 or on the same x-y plane with respect to the z-axis in a state of being coupled to the hinge assemblies 240 and 240-1. The wing plates 261 and 262 may rotate clockwise or counterclockwise depending on the operation of the hinge of the at least one hinge assembly 240 and/or 240-1. For example, while the first wing plate 261 rotates counterclockwise, the second wing plate 262 may rotate clockwise, and while the first wing plate 261 rotates clockwise, the second wing plate 262 may rotate counterclockwise. The first wing plate 261 may support a flat first surface of the third region 230c of the first display 230 that is folded into the dumbbell shape (e.g., the shape of the water drop to which gravity is applied), and the second wing plate 262 may support a flat second surface (e.g., a surface symmetrical to the first surface with respect to the z-axis) of the third region 230c of the first display 230 that is folded into the dumbbell shape.

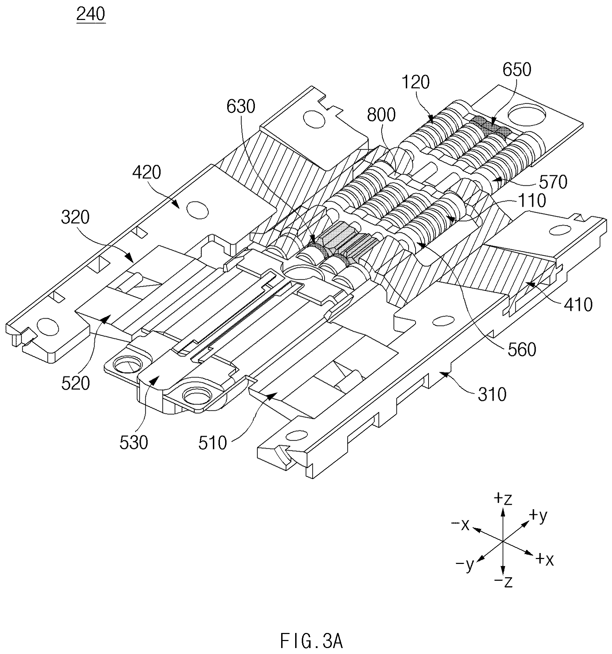

FIG. 3A is a perspective view illustrating an example of a hinge assembly of an electronic device, according to an embodiment.

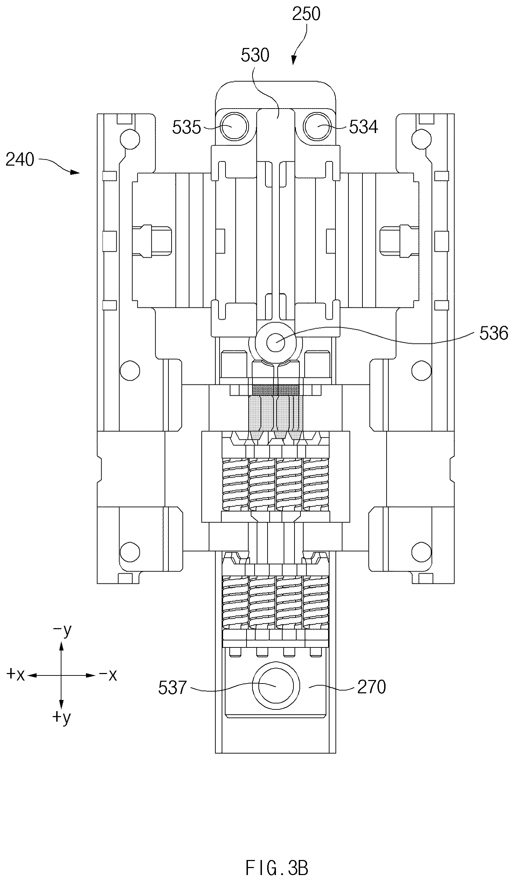

FIG. 3B is a view illustrating an example of a coupled form of the hinge assembly and a hinge housing of the electronic device, according to an embodiment.

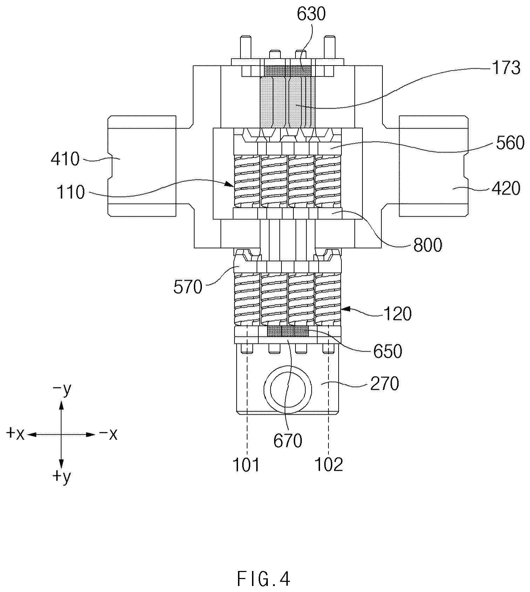

FIG. 4 is a plan view illustrating an example of the hinge assembly of the electronic device, according to an embodiment.

FIG. 5 is an exploded perspective view illustrating an example of the hinge assembly of the electronic device, according to an embodiment.

For convenience of description, in FIGS. 3A to 5, a first hinge assembly 240 among the hinge assemblies (e.g., the hinge assemblies 240 and 240-1 in FIG. 2) is mainly described. The second hinge assembly 240-1 may include a structure and configuration substantially identical to or similar to that of the first hinge assembly 240, and the description provided for the first hinge assembly 240 may be referred to substantially identically or similarly.

Referring to FIGS. 1 to 5, in an embodiment, the first hinge assembly 240 may include a fixing bracket 530 (e.g., a center bracket), a first rotating member 510 (e.g., a first rotating structure or a first rotating body), a second rotating member 520 (e.g., a second rotating structure or a second rotating body), a first link member 310 (e.g., a first slide link, a first rotational support structure, or a first arm link member), a second link member 320 (e.g., a second slide link, a second rotational support structure, or a first rotational link member), a first arm member 410 (e.g., a first arm structure or a first arm), and a second arm member 420 (e.g., a second arm structure or a second arm).

According to an embodiment, at least one of the components included in the first hinge assembly 240 may be omitted. For example, when the first rotating member 510 and the second rotating member 520 are directly coupled to the housings 210 and 220, and the arm members 410 and 420 are coupled to the rotating members 510 and 520 to rotate corresponding to the rotation of the rotating members 510 and 520, the first link member 310 and the second link member 320 may be omitted.

The first hinge assembly 240 may include a plurality of shafts 131, 132, 133, and 134, at least one cam member 560 and/or 570 (e.g., a cam structure), a first main gear 171, a second main gear 172, at least one interlocking gear 1731 and/or 1732, at least one shaft bracket 270 and/or 650 (e.g., a shaft fixing portion), at least one gear bracket 610 and/or 630 (e.g., a gear fixing member), a first elastic assembly 110 (e.g., an upper elastic member), a second elastic assembly 120 (e.g., a lower elastic member), a support bracket 800 (e.g., an alignment bracket), a plurality of coupling members 661 and 662 (e.g., fixing clips or e-rings), and a fixing member 670 (e.g., an e-ring).

At least some of the components of the first hinge assembly 240 described above may be at least partially provided with a metal material to have a certain level of rigidity. Alternatively, as needed, the first hinge assembly 240 may be made of reinforced plastic or synthetic resin. According to an embodiment, at least a portion of the first hinge assembly 240 described above may be omitted or modified. For example, at least some of the components of the above-described coupling members 661 and 662 may be omitted. Alternatively, a particular structure or configuration of the first hinge assembly 240 may be integrated into or combined with another structure or configuration.

The first hinge assembly 240 according to an embodiment may include a movement prevention structure 601 (e.g., a force transmission structure or a fixed structure) configured to maintain contact between the first cam member 560 and the interlocking gears 173. For example, the movement prevention structure 601 may be configured to move operatively with other components of the first hinge assembly 240. For example, the movement prevention structure 601 may include a second gear bracket 630 and a second shaft bracket 650 that are at least partially coupled to the third shaft 133 and the fourth shaft 134.

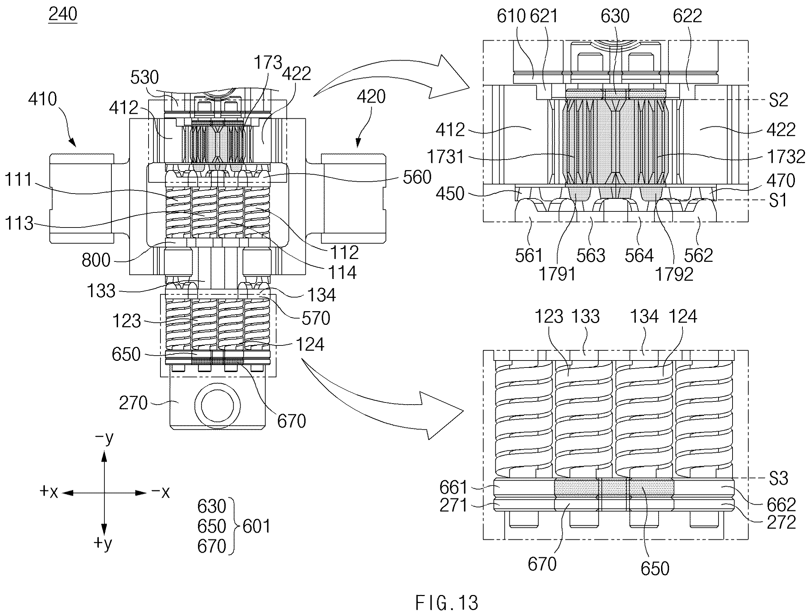

As an example of the movement preventing operation, as a first-third elastic member 113 into which a portion of the third shaft 133 is inserted and a first-fourth elastic member 114 into which a portion of the fourth shaft 134 is inserted push the first cam member 560 upward in a -y-axis direction while they are supported by the support bracket 800, even while the interlocking gears 173 perform gear operation (e.g., rotational operation), the third cam structure (e.g., a third cam structure 1791 in FIG. 13) and the fourth cam structure (e.g., a cam structure 1792 in FIG. 13) formed on the interlocking gears 173 may be maintained in close contact with the first cam member 560. In the operation, the second gear bracket 630 may come into contact with a surface opposite to a surface that contacts the first cam member 560 of the interlocking gears 173 to assist in maintaining a contact state between the cam structures 1791 and 1792 of the interlocking gears 173 and the first cam member 560.

As an example of the movement preventing operation, as a second-third elastic member 123 into which a portion of the third shaft 133 is inserted and a second-fourth elastic member 124 into which a portion of the fourth shaft 134 is inserted push the second shaft bracket 650 downward in a +y-axis direction while they are supported by the second cam member 570 disposed at a lower portion (e.g., a +y-axis) of the support bracket 800, the second gear bracket 630 coupled to the third shaft 133 and the fourth shaft 134 may be moved in the +y-axis direction. Accordingly, the third cam structure 1791 and the fourth cam structure 1792 formed on the interlocking gears 173 may be maintained in close contact with the first cam member 560 even while the interlocking gears 173 are in gear operation (e.g., rotational operation). In the operation, the second shaft bracket 650 may come into contact with a surface opposite to a surface that contacts the second cam member 570 of the second-third elastic member 123 and the second-fourth elastic member 124 to assist in maintaining a contact state between the cam structures 1791 and 1792 of the interlocking gears 173 and the first cam member 560. Below, each of the above-described components for preventing movement and the peripheral components in contact with or combined with the component are described.

The fixing bracket 530 may include a bracket body 533, a first rail 531 (e.g., a first fixed rail), and a second rail 532 (e.g., a second fixed rail). One side (e.g., a side wall facing the +y-axis direction) of the bracket body 533 may have grooves formed on which one edge (e.g., a -y-axis edge) of at least one of a first outer shaft 131 (e.g., a first shaft), a second outer shaft 132 (e.g., a second shaft), a first inner shaft 133 (e.g., a third shaft), and the second inner shaft 134 (e.g., a fourth shaft) may be mounted. One side of the bracket body 533 (e.g., a side wall facing the +y-axis direction) may have grooves formed on which at least one interlocking gear 1731 and/or 1732 may be mounted.

The fixing bracket 530 may be at least partially seated and fixed to one side of the hinge housing 250. For example, the fixing bracket 530 may be fixed to the -y-axis edge or the +y-axis edge of the hinge housing 250. For example, the fixing bracket 530 may include at least one hole 534, 535, and/or 536 formed therethrough to be fixed to the hinge housing 250. For example, a fastening member (e.g., a screw) may be inserted into a pair of holes 534 and 535 formed adjacent to the -y-axis edge of the fixing bracket 530 so that the fixing bracket 530 and the hinge housing 250 may be at least partially coupled. For example, a fastening member may be inserted into a hole 536 formed adjacent to the +y-axis edge of the fixing bracket 530 so that the fixing bracket 530 and the hinge housing 250 may be at least partially coupled. The fixing bracket 530 may include structures (e.g., the first rail 531 and the second rail 532) to which a portion of the first rotating member 510 (e.g., a first rail structure 511) and a portion of the second rotating member 520 (e.g., a third rail structure 521) may be rotatably fastened.

The first rail 531 of the fixing bracket 530 may be formed with a structure corresponding to the first rail structure 511 of the first rotating member 510, and the second rail 532 may be formed with a structure corresponding to the third rail structure 521 of the second rotating member 520. For example, the first rail 531 and/or the second rail 532 may include a cross-section in which at least a portion is formed in an arc shape or a crescent shape from an upper surface (e.g., a surface facing a +z-axis) of the fixing bracket 530 toward a lower surface (e.g., a surface facing a -z-axis).

The first rail 531 of the fixing bracket 530 may be disposed be biased in the +x-axis direction further than the second rail 532 with respect to a first axis 101 and a second axis 102, and the second rail 532 may be disposed further than the first rail 531 in the -x-axis direction with respect to the first axis 101 and the second axis 102.

According to an embodiment, the first axis 101 and the second axis 102 may be formed to be spaced apart by a specified interval. According to an embodiment, an interval between the first axis 101 and the second axis 102 may be formed to be smaller than an interval between the first outer shaft 131 and the second outer shaft 132. According to an embodiment, the first axis 101 and the second axis 102 may be formed above the first outer shaft 131 and the second outer shaft 132 with respect to the z-axis. Alternatively, the first axis 101 and the second axis 102 may be formed closer to the first display 230 than the first outer shaft 131 and the second outer shaft 132 with respect to the z-axis.

The first rotating member 510 may include a first rotating body 513, a first rail structure 511 extending to one end of the first rotating body 513 (e.g., an end in the -x-axis direction), and a second rail structure 512 extending to the other end of the first rotating body 513 (e.g., an end in the +x-axis direction). The first rotating body 513 may be disposed between the first rail structure 511 and the second rail structure 512, which have a rail form. At least a portion of the first rotating body 513 may be fastened to the fixing bracket 530. The first rail structure 511 and the second rail structure 512 may be formed in steps centered on the first rotating body 513.

The first rail structure 511 of the first rotating member 510 may be fastened to one side of the fixing bracket 530 (e.g., the first rail 531) to be hingedly movable. The second rail structure 512 of the first rotating member 510 may be coupled to one side of the first link member 310 to perform a sliding operation (e.g., a rotating operation or an arc motion) corresponding to the hinge operation (e.g., a rotating operation or a sliding operation) of the first rail structure 511. While the first link member 310 coupled to the first housing 210 moves in accordance with the movement of the first housing 210, the first rail structure 511 of the first rotating member 510 fastened to the fixing bracket 530 may rotate in place based on the first axis 101. For example, the second rail structure 512 of the first rotating member 510 may rotate (e.g., slide) within the first link member 310 while moving in one direction (e.g., counterclockwise while the electronic device 200 is being folded from the unfolded state or clockwise while the electronic device 200 is being unfolded from the folded state). At least a portion of the first wing plate 261 among the wing plates 261 and 262 may be fixed to the first rotating member 510. In this regard, the first rotating member 510 may include at least one hole or groove used to couple to the first wing plate 261. In an example, the first rotating member 510 may include a hole 515 into which a first shaft member 301 is inserted to be able to be coupled to the first wing plate 261. The first link member 310 may include rail wings having a hollow space formed in the center and curved surfaces disposed on both sides.

According to an embodiment, the second rotating member 520 may include a second rotating body 523, the third rail structure 521 extending to the other end of the second rotating body 523 (e.g., an end in the +x-axis direction), and a fourth rail structure 522 extending to one end of the second rotating body 523 (e.g., an end in the -x-axis direction). The second rotating body 523 may be disposed between the third rail structure 521 and the fourth rail structure 522, which have a rail form. At least a portion of the second rotating body 523 may be fastened to the fixing bracket 530. The third rail structure 521 and the fourth rail structure 522 may be formed in steps centered on the second rotating body 523. In an example, the second rotating member 520 may include a hole 525 into which a second shaft member 302 is inserted to be able to be coupled to the second wing plate 262.

The third rail structure 521 may be fastened to the other side of the fixing bracket 530 (e.g., the second rail 532) so that the third rail structure is hingedly movable after being fastened. The third rail structure 521 may rotate in place with respect to the second axis 102 while the second link member 320 coupled to the second housing 220 moves in accordance with the movement of the second housing 220. According to an embodiment, the third rail structure 521 may include a rail structure similar or identical to the first rail structure 511.

The fourth rail structure 522 may be coupled to the second link member 320. The fourth rail structure 522 may rotate (e.g., slide) within the second link member 320 while moving in one direction (e.g., clockwise while the electronic device 200 is being folded from the unfolded state or counterclockwise while the electronic device 200 is being unfolded from the folded state). In this regard, the second link member 320 may include rail wings having a hollow space formed in the center and curved surfaces disposed on both sides, similar to the first link member 310. According to an embodiment, the fourth rail structure 522 may include a rail structure similar or identical to the second rail structure 512.

The second rotating member 520 may move in a direction opposite to a moving direction of the first rotating member 510. For example, while the first rail structure 511 of the first rotating member 510 rotates in place counterclockwise, the third rail structure 521 of the second rotating member 520 may rotate in place clockwise.

While the electronic device 200 is being folded, the first rail structure 511 of the first rotating member 510 may rotate counterclockwise, and the first link member 310 inserted into the second rail structure 512 may slide clockwise along the second rail structure 512. The sliding operation is relative, so that the first link member 310 may slide clockwise with respect to the second rail structure 512.

While the electronic device 200 is being folded, the third rail structure 521 of the second rotating member 520 may rotate clockwise along the second rail 532 of the fixing bracket 530, and the second link member 320 inserted into the fourth rail structure 522 may slide counterclockwise. The second link member 320 may slide counterclockwise with respect to the fourth rail structure 522.

According to an embodiment, the first link member 310 may include a structure that is coupled and fixed to one side of the first housing 210. The first link member 310 may include a third rail 311 on which a portion of the first rotating member 510 (e.g., the second rail structure 512) is seated. The first link member 310 may include a first slide mounting portion 312 on which a first slide portion 413 of the first arm member 410 is seated. The first link member 310 may be formed to have a width in the y-axis direction longer than a width in the x-axis direction to accommodate the third rail 311 and the first slide mounting portion 312. A first link body 313 of the first link member 310 may be fixed to the first housing 210. The third rail 311 may be disposed in one direction (e.g., the -y-axis direction) of the first link body 313. The first slide mounting portion 312 may be disposed in another direction (e.g., the +y-axis direction) of the first link body 313. The first slide portion 413 of the first arm member 410 may be seated to the first slide mounting portion 312 to guide the sliding operation of the first slide portion 413.

According to an embodiment, the second link member 320 may include a structure that is coupled and fixed to one side of the second housing 220. The second link member 320 may include a fourth rail 321 on which a portion of the second rotating member 520 (e.g., the fourth rail structure 522) is seated. The second link member 320 may include a second slide mounting portion 322 on which a second slide portion 423 of the second arm member 420 is seated. The second link member 320 may be formed to have a width in the y-axis direction longer than a width in the x-axis direction to accommodate the fourth rail 321 and the second slide mounting portion 322. A second link body 323 of the second link member 320 may be fixed to the second housing 220. The fourth rail 321 may be disposed in one direction (e.g., the -y-axis direction) of the second link body 323. The second slide mounting portion 322 may be disposed in another direction (e.g., the +y-axis direction) of the second link body 323. The second slide portion 423 of the second arm member 420 is seated to the second slide mounting portion 322 to guide the sliding operation of the second slide portion 423.

According to an embodiment, the first arm member 410 may be disposed symmetrically to the second arm member 420 with respect to the y-axis. The first arm member 410 may rotate in a direction from the +z-axis toward the +x-axis or in a direction from the +x-axis toward the +z-axis. The first arm member 410 may include a first arm body 414, the first slide portion 413, a first arm portion 411, and a second arm portion 412. The first arm body 414 may be disposed between the first arm portion 411 and the second arm portion 412. The first arm portion 411 may be formed to extend in the -x-axis direction from the first arm body 414, and may include a through hole so that the first outer shaft 131 may pass therethrough. A cam structure that performs a cam operation by coming into contact with one side of the cam member 560 or 570 (e.g., a cam portion disposed in the -y-axis direction) may be provided in a peripheral structure forming the through hole. The cam structure of the first arm portion 411 may be formed on a surface facing the second cam member 570 (e.g., a surface of the first arm portion 411 in the +y-axis direction). The second arm portion 412 may be formed to extend from the first arm body 414 in the -x-axis direction and may be disposed spaced apart from the first arm portion 411 in the -y-axis direction. The second arm portion 412 may include a through hole so that the first outer shaft 131 may pass therethrough. The through hole included in the second arm portion 412 and the through hole included in the first arm portion 411 may communicate with each other. A cam structure that performs a cam operation by coming into contact with one side of the first cam member 560 (e.g., a cam portion disposed in the -y-axis direction) may be provided in a peripheral structure forming the through hole of the second arm portion 412. The cam structure of the second arm portion 412 may be formed on a surface facing the first cam member 560 (e.g., a surface of the second arm portion 412 in the +y-axis direction). The first slide portion 413 may be formed to extend in the +x-axis direction from the first arm body 414. The first slide portion 413 may be fastened to the first link member 310 to perform a sliding operation along the rail wings formed on the first slide mounting portion 312 while the electronic device 200 performs a hinge operation. The first slide portion 413 may include rail grooves that may be fastened to the rail wings formed on the first slide mounting portion 312 of the first link member 310.

According to an embodiment, the second arm member 420 may be disposed symmetrically to the first arm member 410 with respect to the y-axis. The second arm member 420 may rotate in a direction from the +z-axis toward the -x-axis or in a direction from the -x-axis toward the +z-axis. The second arm member 420 may rotate in a direction opposite to the moving direction of the first arm member 410. The second arm member 420 may include a second arm body 424, a third arm portion 421, a fourth arm portion 422, and the second slide portion 423. The second arm body 424 may be disposed between the third arm portion 421 and the fourth arm portion 422. The third arm portion 421 may be formed to extend in the +x-axis direction from the second arm body 424, and may include a through hole so that the second outer shaft 132 may pass therethrough. A cam structure that performs a cam operation by coming into contact with one side of the second cam member 570 (e.g., a cam portion disposed in the -y-axis direction) may be provided in a peripheral structure forming the through hole of the third arm portion 421. The cam structure of the third arm portion 421 may be formed on a surface facing the second cam member 570 (e.g., a surface of the third arm portion 421 in the +y-axis direction). The fourth arm portion 422 may be formed to extend from the second arm body 424 in the +x-axis direction, and may be disposed apart from the third arm portion 421. The fourth arm portion 422 may include a through hole so that the second outer shaft 132 may pass therethrough. The through hole included in the fourth arm portion 422 and the through hole included in the third arm portion 421 may communicate with each other. A cam structure that performs a cam operation by coming into contact with one side of the first cam member 560 (e.g., a cam portion disposed in the -y-axis direction) may be provided in a peripheral structure forming the through hole of the fourth arm portion 422. The cam structure of the fourth arm portion 422 may be formed on a surface facing the first cam member 560 (e.g., a surface of the fourth arm portion 422 in the +y-axis direction). The second slide portion 423 may be formed to extend in the -x-axis direction from the second arm body 424. The second slide portion 423 may be fastened to the second link member 320 to perform a sliding operation along the rail wings formed on the second slide mounting portion 322 while the electronic device 200 performs the hinge operation. The second slide portion 423 may include rail grooves that may be fastened to the rail wings formed on the second slide mounting portion 322 of the second link member 320.

According to an embodiment, the first outer shaft 131 may have a rod shape in which a length in the y-axis direction is longer than a length in the x-axis or z-axis direction. The first outer shaft 131 may be formed of a metal material to support inserted components. For example, the first arm portion 411 of the first arm member 410, the second arm portion 412, the cam members 560 and 570, the support bracket 800, at least one washer ring, a first-first elastic member 111, a second-first elastic member 121, the first shaft bracket 270, the first gear bracket 610, and a first coupling member 661 may be inserted into the first outer shaft 131.

According to an embodiment, the second outer shaft 132 may have the same or similar shape as the first outer shaft 131. For example, the second shaft 132 may have a rod shape in which a length in the y-axis direction is longer than a length in the x-axis or z-axis direction. The second shaft 132 may be formed of a metal material having a strength greater than a specified size to support inserted components. For example, the third arm portion 421 of the second arm member 420, the fourth arm portion 422, the cam members 560 and 570, the support bracket 800, at least one washer ring, a first-second elastic member 112, a second-second elastic member 122, the first shaft bracket 270, the first gear bracket 610, and a second coupling member 662 may be inserted into the second shaft 132.

According to an embodiment, the first inner shaft 133 may have the same or similar shape as the first outer shaft 131. For example, the first inner shaft 133 may have a rod shape in which a length in the y-axis direction is longer than a length in the x-axis or z-axis direction. For example, the first interlocking gear 1731, the cam members 560 and 570, the support bracket 800, at least one washer ring, the first-third elastic member 113, the second-third elastic member 123, the second shaft bracket 650, the first gear bracket 610, the second gear bracket 630, and the fixing member 670 may be inserted into the first inner shaft 133.

According to an embodiment, the second inner shaft 134 may have the same or similar shape as the first inner shaft 133. For example, the second inner shaft 134 may have a rod shape in which a length in the y-axis direction is longer than a length in the x-axis or z-axis direction. The second inner shaft 134 may be formed of a metal material having a strength greater than a specified size to support inserted components. For example, the second interlocking gear 1732, the cam members 560 and 570, the support bracket 800, at least one washer ring, the first-fourth elastic member 114, the second-fourth elastic member 124, the second shaft bracket 650, the first gear bracket 610, the second gear bracket 630, and the fixing member 670 may be inserted into the second inner shaft 134.

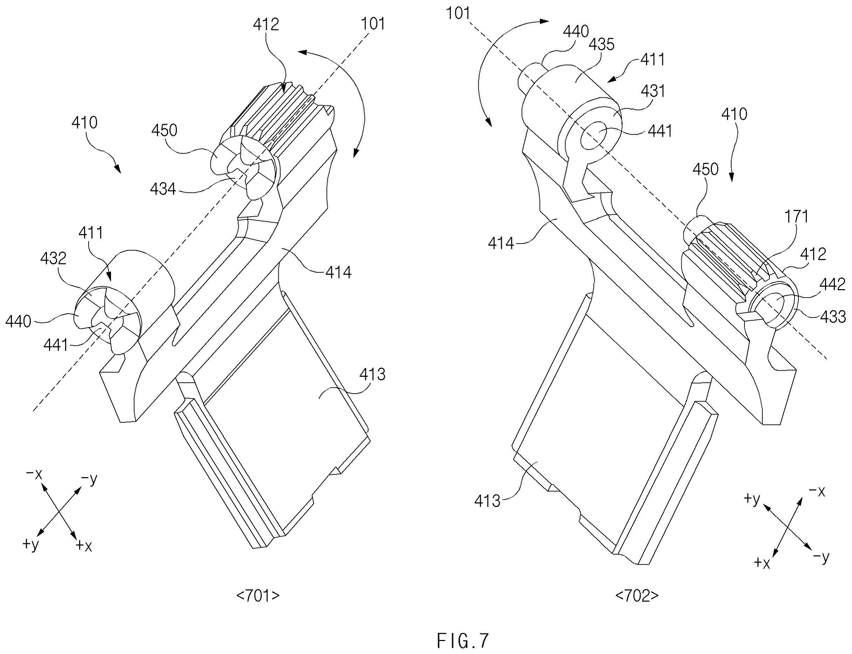

The first cam member 560 may include a first cam body 565 and at least one first cam portion (e.g., the first-first cam portion 561). The first cam member 560 may include a plurality of first cam holes in which at least a portion of each of the first outer shaft 131, the second outer shaft 132, the first inner shaft 133, and the second inner shaft 134 is mounted. Each of the plurality of first cam holes may be formed through in the y-axis direction, and may be formed at the center of the first cam portion. At least a portion of each of the first outer shaft 131, the second outer shaft 132, the first inner shaft 133, and the second inner shaft 134 may be inserted into the first cam hole of the first cam member 560 and then mounted in the first cam hole. The first cam portion may have a cylindrical shape surrounding the first cam holes formed to pass through in the y-axis direction at the center of the volume. For example, the first-first cam portion 561 may be disposed to engage with the first-second cam structure (e.g., a first-second cam structure 450 in FIG. 7) formed on the second arm portion 412 of the first arm member 410. In the first-first cam portion 561, a ridge portion formed in a state of protruding (e.g., in a protruding state) in the -y-axis direction and a valley portion disposed relatively in the +y-axis direction may be repeatedly disposed. A top portion of the ridge portion of the first-first cam portion 561 may be formed to be higher than a surrounding area (e.g., a trough portion), and may be formed to be flat in a direction parallel to the x-axis.

The second cam member 570 may include a second cam body 575 and at least one second cam portion (e.g., a second-first cam portion 571). The second cam member 570 may include a plurality of second cam holes in which at least a portion of each of the first outer shaft 131, the second outer shaft 132, the first inner shaft 133, and the second inner shaft 134 is mounted. Each of the plurality of second cam holes may be formed through in the y-axis direction, and may be formed at the center of the second cam portion. At least a portion of each of the first outer shaft 131, the second outer shaft 132, the first inner shaft 133, and the second inner shaft 134 may be inserted into the second cam hole of the second cam member 570 and then mounted in the second cam hole. The second cam portion may have a cylindrical shape surrounding the second cam holes formed to pass through in the y-axis direction at the center of the volume. For example, the second-first cam portion 571 may be disposed to engage with the first-first cam structure (e.g., a first-first cam structure 440 in FIG. 7) formed on the first arm portion 411 of the first arm member 410. In the second-first cam portion 571, a ridge portion formed in a state of protruding (e.g., in a protruding state) in the -y-axis direction and a valley portion disposed relatively toward the +y-axis may be repeatedly disposed. A top portion of the ridge portion of the second-first cam portion 571 may be formed to be higher than a surrounding area (e.g., a valley portion), and may be formed to be flat in a direction parallel to the x-axis.

According to an embodiment, the cam members 560 and 570 may retract in one direction (e.g., in the -y-axis direction) corresponding to cam operations of the cam structure of the first arm member 410 and the cam members 560 and 570 and the cam structure of the second arm member 420 and the cam members 560 and 570 while the first arm member 410 and the second arm member 420 are rotating within a certain angular range and then move in the opposite direction (e.g., in the +y-axis direction) of the one direction by the elasticity of the first elastic assembly 110 and the second elastic assembly 120 when the ridges and valleys of the cams (e.g., the cam structure and the cam portion) engage with each other, so that they may return to their original positions.

According to an embodiment, the first elastic assembly 110 may include a plurality of elastic members (e.g., elastic bodies) having a hollow spring shape at the center. For example, the first elastic assembly 110 may include the first-first elastic member 111 and the first-second elastic member 112 disposed on the outside, and the first-third elastic member 113 and the first-fourth elastic member 114 disposed on the inside. The first elastic assembly 110 may be disposed between the first cam member 560 and the support bracket 800. The first elastic assembly 110 may operate to push the first cam member 560 in one direction (e.g., in the -y-axis direction). Alternatively, in an example, the first elastic assembly 110 may exert an elastic force to push the support bracket 800 toward the arm members 410 and 420 (e.g., in the +y-axis direction).

According to an embodiment, the second elastic assembly 120 may include a plurality of elastic members (e.g., elastic bodies) having a hollow spring shape at the center. For example, the second elastic assembly 120 may include the second-first elastic member 121 and the second-second elastic member 122 disposed on the outside, and the second-third elastic member 123 and the second-fourth elastic member 124 disposed on the inside. Since the second elastic assembly 120 is disposed between the second cam member 570 and the first shaft bracket 270, the second elastic assembly 120 may operate to push the second cam member 570 in one direction.

According to an embodiment, the elastic force generated by the second elastic assembly 120 may be similar to the elastic force generated by the first elastic assembly 110 within a certain range.

The first gear bracket 610 may include insertion holes into which the first outer shaft 131, the second outer shaft 132, the first inner shaft 133, and the second inner shaft 134 are inserted. For example, the first gear bracket 610 may include a first insertion hole into which one end of the first outer shaft 131 in the -y-axis direction is inserted, and a second insertion hole into which one end of the second outer shaft 132 in the -y-axis direction is inserted. One side (e.g., a side portion in the -y-axis direction) of the first gear bracket 610 may be fastened to at least a portion (e.g., a side wall in the +y-axis direction) of the fixing bracket 530. The first gear bracket 610 may be formed to accommodate at least a portion of the shafts 131, 132, 133, and 134 so that the shafts may be aligned axially (e.g., in the y-axis direction). At least a portion of the surface of the first gear bracket 610 facing the +y-axis may be in contact with the second gear bracket 630, and the other portion thereof may be in contact with the second arm portion 412 and the fourth arm portion 422.

The first shaft bracket 270 may include shaft holes in which a plurality of shafts may be mounted and fixed. The first shaft bracket 270 may include a plurality of shaft holes in which each of the first outer shaft 131 and the second outer shaft 132 is mounted and fixed. A shape of at least one of the plurality of shaft holes may be provided as a cylinder identical to or similar to a cross-section cut along an x-z plane of each of the outer shafts 131 and 132. In an example, the first shaft bracket 270 may include a fifth insertion hole into which one end of the first outer shaft 131 in the +y-axis direction is inserted and a sixth insertion hole into which one end of the second outer shaft 132 in the +y-axis direction is inserted. In an embodiment, the first shaft bracket 270 may be at least partially seated and fixed to one side of the hinge housing 250. For example, the first shaft bracket 270 may be fixed to a -y-axis edge or +y-axis edge of the hinge housing 250. For example, the first shaft bracket 270 may be fixed at a position opposite to a position at which the fixing bracket 530 of the hinge housing 250 is fixed. For example, the first shaft bracket 270 may include at least one hole 537 into which a fastening member (e.g., a screw) may be inserted. The fastening member is inserted into the hole 537 of the first shaft bracket 270 so that the first shaft bracket 270 and the hinge housing 250 may be at least partially coupled.

According to an embodiment, the first main gear 171 may be disposed on one side of the first outer shaft 131. For example, the first main gear 171 may be disposed in an integrated form on the second arm portion 412 of the first arm member 410. In an embodiment, the second main gear 172 may be disposed on one side of the second outer shaft 132. For example, the second main gear 172 may be disposed in an integrated form on the fourth arm portion 422 of the second arm member 420. At least one interlocking gear 1731 and/or 1732 may be disposed between the first main gear 171 and the second main gear 172, and may be gear-engaged with the first main gear 171 and the second main gear 172. For example, at least one interlocking gear 1731 and/or 1732 may include the first interlocking gear 1731 that is gear-engaged with the first main gear 171 and the second interlocking gear 1732 that is gear-engaged with the second main gear 172. The interlocking gears 173 may be used to share the rotational force of the first outer shaft 131 and the rotational force of the second outer shaft 132. According to an embodiment, the first main gear 171 and the second main gear 172 have been described as having a structure formed on the arm members 410 and 420 as an example, but the first main gear 171 and the second main gear 172 may be disposed separately from the arm members 410 and 420.

The movement prevention structure 601 may be defined as a structure for improving a situation in which the interlocking gears 173 may be moved in a space between the first cam member 560 and the first gear bracket 610. Alternatively, the movement prevention structure 601 may be defined as a structure coupled to the first inner shaft 133 and the second inner shaft 134 so that the contact between the cam structures formed on the interlocking gears 173 and the first cam portion (e.g., the first-first cam portion 561) of the first cam member 560 may be maintained. For example, the movement prevention structure 601 may include the second gear bracket 630, the second shaft bracket 650, and the fixing member 670. In addition, the movement prevention structure 601 may contribute to solidifying the contact between the main gears 171 and 172 and the first cam member 560 in the process of maintaining the contact between the interlocking gears 173 and the first cam member 560. For example, the movement prevention structure 601 may improve or prevent occurrence of a gap between the gears 171, 172, and 173 and the first cam member 560. In an embodiment, noise and/or friction that may be generated when the gears move within an empty space (e.g., a gap) in the process for the folding and/or unfolding operation of the electronic device 200 may be reduced by the movement prevention structure 601. In addition, unnecessary movement and friction of the gears may be prevented, thereby improving the durability and lifespan of the hinge assembly (e.g., the first hinge assembly 240).

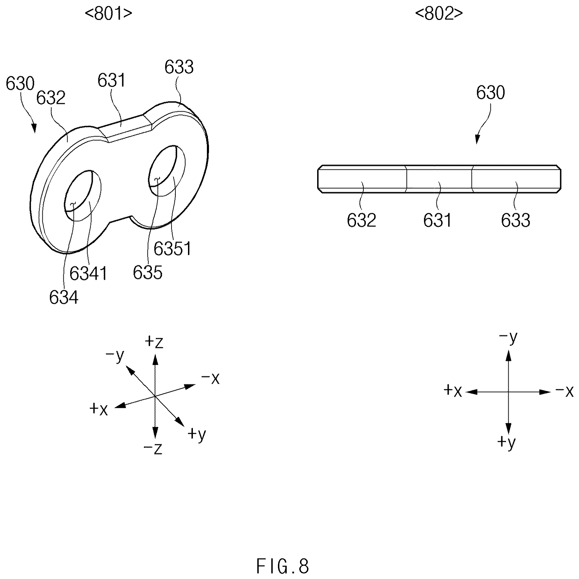

The second gear bracket 630 may be disposed on one side (e.g., in the +y-axis direction) of the first gear bracket 610, and may include insertion holes into which the first inner shaft 133 and the second inner shaft 134 are inserted. For example, the second gear bracket 630 may include a third insertion hole (e.g., a third insertion hole 634 in FIG. 8) into which one end of the first inner shaft 133 in the -y-axis direction is inserted, and a fourth insertion hole (e.g., a fourth insertion hole 635 in FIG. 8) into which one end of the second inner shaft 134 in the -y-axis direction is inserted. A surface of the second gear bracket 630 facing the - y-axis may come into contact with the first gear bracket 610. A surface of the second gear bracket 630 facing the +y-axis may come into contact with the interlocking gears 173. The second gear bracket 630 may support the interlocking gears 173 in the first direction (e.g., the +y-axis direction) to maintain the contact with the interlocking gears 173 and the first cam portion (e.g., the first-first cam portion 561) of the first cam member 560.

The interlocking gears 173 may include a first interlocking gear 1731 fastened to the first inner shaft 133 and the second interlocking gear 1732 fastened to the second inner shaft 134. Ends (e.g., ends facing the -y-axis) of the first interlocking gear 1731 and the second interlocking gear 1732 may be in contact with the second gear bracket 630. The other ends (e.g., ends facing the +y-axis) of the first interlocking gear 1731 and the second interlocking gear 1732 may be in contact with the first cam member 560. Each of the first interlocking gear 1731 and the second interlocking gear 1732 may include a cam structure disposed to engage with the first cam portion (e.g., the first-first cam portion 561) of the first cam member 560. In an embodiment, the interlocking gears 173 may move (e.g., slide) on the inner shafts 133 and 134 with the movement of the first inner shaft 133 and the second inner shaft 134 (e.g., movement in the +y-axis or -y-axis direction). In an embodiment, the interlocking gears 173 may be formed integrally with the first inner shaft 133 and the second inner shaft 134.

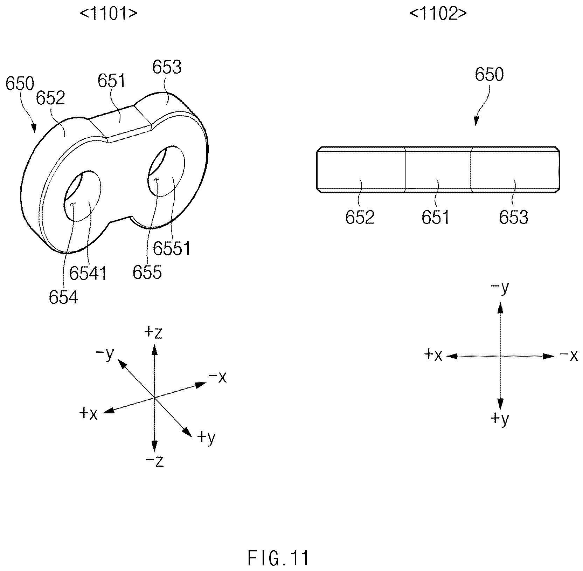

The second shaft bracket 650 may be disposed between the second elastic assembly 120 and the first shaft bracket 270, and may include insertion holes into which the first inner shaft 133 and the second inner shaft 134 are inserted. For example, the second shaft bracket 650 may include a seventh insertion hole (e.g., a seventh insertion hole 654 in FIG. 11) into which one end of the first inner shaft 133 in the +y-axis direction is inserted, and an eighth insertion hole (e.g., an eighth insertion hole 655 in FIG. 11) into which one end of the second inner shaft 134 in the +y-axis direction is inserted. A surface of the second shaft bracket 650 facing the +y-axis may contact the first shaft bracket 270, and a surface thereof facing the -y-axis may contact the second-third elastic member 123 and the second-fourth elastic member 124. The second shaft bracket 650 may be at least partially fixed to the inner shafts 133 and 134 to transmit an elastic force (e.g., a restoring force) of the second-third elastic member 123 and the second-fourth elastic member 124 to the inner shafts 133 and 134.

In an embodiment, the first coupling member 661 may be disposed on one side (e.g., a side in the +x-axis direction) of the second shaft bracket 650, and the second coupling member 662 may be disposed on the other side (e.g., a side in the -x-axis direction). The first coupling member 661 and the second coupling member 662 may be penetrated by the first outer shaft 131 and the second outer shaft 132, respectively. The first coupling member 661 and the second coupling member 662 may be fastened and fixed to a first fixing portion 271 and a second fixing portion 272 formed in the first shaft bracket 270.

In an embodiment, the fixing member 670 may be disposed between the second shaft bracket 650 and the first shaft bracket 270. The fixing member 670 may include through holes into which the first inner shaft 133 and the second inner shaft 134 are inserted, and may be at least partially fastened to the inner shafts 133 and 134 so that a fixed state of the second shaft bracket 650 and the inner shafts 133 and 134 may be maintained. In an embodiment, the fixing member 670 may be disposed between a portion (e.g., the first fixing portion 271) that is connected by being penetrated by the first outer shaft 131 of the first shaft bracket 270 and a portion (e.g., the second fixing portion 272) that is connected by being penetrated by the second outer shaft 132. The fixing member 670 may be in the form of, for example, an E-ring.

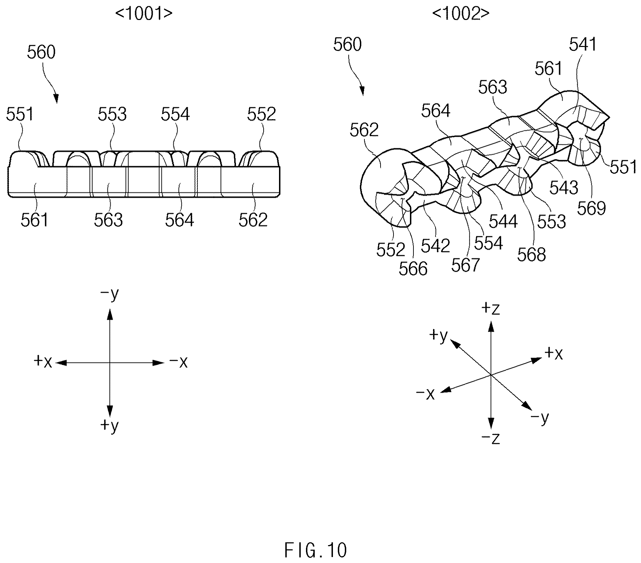

In an embodiment, by applying the movement prevention structure 601 to the hinge assembly (e.g., the first hinge assembly 240), the contact between the cam structures of the first cam portions (e.g., the first cam portions 561, 562, 563, and 564 in FIG. 10) of the first cam member 560 and the gears (e.g., the interlocking gears 173 and the main gears 171 and 172) may be constantly maintained. For example, the elastic force generated from the second elastic assembly 120 may be transmitted to the first inner shaft 133 and the second inner shaft 134 through the second shaft bracket 650. The inner shafts 133 and 134 may be moved in the +y-axis or -y-axis direction by the elastic force transmitted to the inner shafts 133 and 134, and a state in which the cam structures of the first cam portions 561, 562, 563, and 564 and the gears 171, 172, and 173 are all in contact may be implemented.

As described above, by applying the movement prevention structure 601 to at least one hinge assembly 240 and/or 240-1 of the electronic device 200 according to an embodiment disclosed herein, the frictional force provided in the process of folding and/or unfolding the electronic device 200 may be increased. For example, the movement prevention structure 601 may be configured to prevent frictional loss due to dimensional deviation of at least some of the gears 171, 172, and 173. For example, the movement prevention structure 601 may be configured to move in a direction in which contact between the first cam portions 561, 562, 563, and 564 of the first cam member 560 and the cam structures of the gears is maintained. As the contact is constantly maintained, the frictional loss due to the gap between the first cam portions and the cam structures that may be caused by the dimensional deviation may be prevented. In an example, the deviation in the frictional force may be maintained constant even when a positive dimensional deviation (e.g., a gear dimension is greater than a specified value) or a negative dimensional deviation (e.g., a gear dimension is less than a specified value) of the gears occurs. For example, even when a dimensional deviation occurs in each of the gears 171, 172, and 173 by pressing the movement prevention structure 601 and maintaining the contact state between the gears and the first cam member 560 according to the pressing, the deviation in the frictional force between each of the gears 171, 172, and 173 and the first cam member 560 may be maintained constant. In an embodiment, the movement prevention structure 601 may contribute to providing a certain level of frictional force to the hinge assembly (e.g., the first hinge assembly 240 to stably maintain the electronic device 200 at a specified folding angle (e.g., 15 degrees, 30 degrees, 45 degrees, 60 degrees, 75 degrees, 90 degrees, 105 degrees, 120 degrees, 135 degrees, 150 degrees, and 165 degrees). Various usage environments (e.g., a flex mode) may be stably provided at the specified folding angle by utilizing a certain level of frictional force.

In an embodiment, a coupling structure of each of components of the hinge assembly (e.g., the first hinge assembly 240) is not limited to the above-described content and may be variously formed. For example, a structure of a rail projection (e.g., a rail or a rail structure) protruding from one surface of the first hinge assembly 240 and a structure of a rail groove engraved (e.g., recessed) from the one surface may be formed opposite to each other. For example, the rail projection formed in a protruding shape on the first rotating member 510 may be changed into a rail fixing groove in an engraved shape, and correspondingly, a first rail fixing groove (e.g., a first rail groove, or first groove) of the fixing bracket 530 coupled to the first rotating member 510 may be changed into a rail projection having a protruding structure. This structural change may also be applied identically or similarly to a combination of at least two of the second rotating member 520, the fixing bracket 530, the first arm member 410, the second arm member 420, the first link member 310, and the second link member 320.

In an embodiment, the structure fixed to the hinge housing 250 of the hinge assembly (e.g., the first hinge assembly 240) is not limited to the above-described content and may be variously formed. For example, a portion of the fixing bracket 530 or the first shaft bracket 270 may be formed integrally with the hinge housing 250. In addition, for example, the number and shape of holes 534, 535, 536, and 537 formed in the fixing bracket 530 and the first shaft bracket 270 may be modified for stable operation of the first hinge assembly 240. For example, the number and/or shape of the holes may be increased or decreased depending on the size of the first hinge assembly 240.

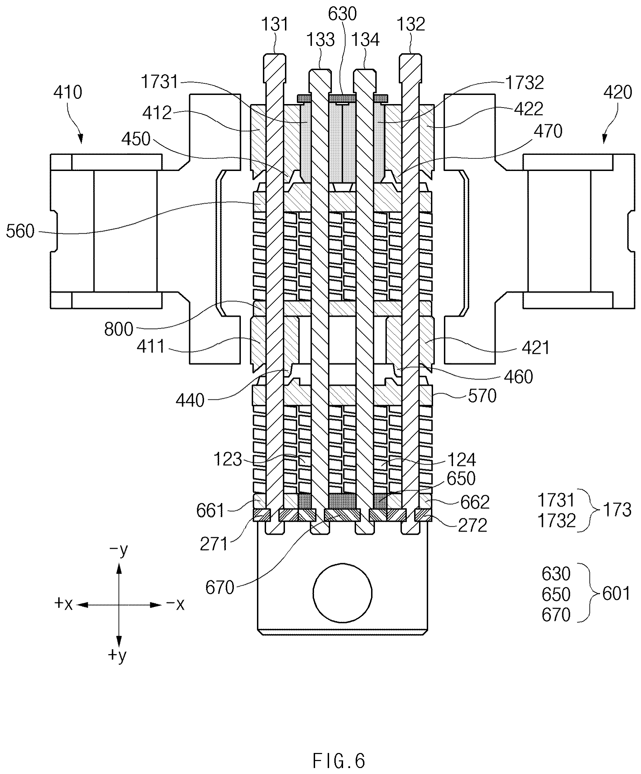

FIG. 6 is a cross-sectional view illustrating an example of a hinge assembly including a movement prevention structure, according to an embodiment. FIG. 6 illustrates a cross-section of a first hinge assembly (e.g., the first hinge assembly 240 in FIG. 2) including the movement prevention structure 601 cut along an x-y plane.

Referring to FIGS. 3A to 6, in an embodiment, the first hinge assembly 240 may be configured to generate a frictional force (e.g., a resistive force, a detent force, or a flex force) that maintains a folded state of an electronic device (e.g., an electronic device 200 in FIG. 1A) at a specified angle. For example, a first frictional force may be generated between the first cam member 560, the second arm portion 412 of the first arm member 410, the fourth arm portion 422 of the second arm member 420, and the interlocking gears 173. For example, when an external force is applied to the electronic device 200 in a folding direction (e.g., a direction in which an angle formed by the first surface 211 of the first housing 210 and the third surface 221 of the second housing 220 in FIG. 1A decreases), a first frictional force in a direction opposite to the rotational direction may be generated on contact surfaces of a first-second cam structure 450 formed on the second arm portion 412 and a second-second cam structure 470 formed on the fourth arm portion 422 and the first cam portion of the first cam member 560 (e.g., the first-first cam portion 561) with the rotation of the first arm member 410 and the second arm member 420. In an embodiment, a cam structure that engages with the first cam portion of the first cam member 560 may also be formed on the interlocking gears 173 to increase the first frictional force. For example, each of the first interlocking gear 1731 that rotates in conjunction with the rotation of the first main gear 171 formed in the first arm member 410 and the second interlocking gear 1732 that rotates in conjunction with the rotation of the second main gear 172 may include the cam structure. An additional first frictional force in a direction opposite to the rotational direction may be generated between the contact surfaces of the cam structure of the interlocking gears 173 and the first cam portion of the first cam member 560.

A second frictional force may be generated between the second cam member 570 and the first arm portion 411 of the first arm member 410 and the third arm portion 421 of the second arm member 420. For example, when the external force is applied to the electronic device 200, the second frictional force in a direction opposite to the rotational direction may be generated on contact surfaces of a first-first cam structure 440 formed on the first arm portion 411 and a second-first cam structure 460 formed on the third arm portion 421 and the second cam portion of the second cam member 570 (e.g., the second-first cam portion 571) with the rotation of the first arm member 410 and the second arm member 420. In order to uniformly maintain the first frictional force and the second frictional force of the first hinge assembly 240, the first hinge assembly 240 may further include the movement prevention structure 601. For example, the movement prevention structure 601 may be configured so that the first inner shaft 133 and the second inner shaft 134 may move in the +y-axis or -y-axis direction within a range in which the first frictional force and the second frictional force may be maintained. For example, an end of the first inner shaft 133 in the -y-axis direction and an end of the second inner shaft 134 in the -y-axis direction may be inserted into the second gear bracket 630, and an end of the first inner shaft 133 in the +y-axis direction and an end of the second inner shaft 134 in the +y-axis direction may be inserted into the second shaft bracket 650 and fixed by the fixing member 670. Since the second gear bracket 630, the second shaft bracket 650, and the fixing member 670 are formed to be separate from the components fastened to the first outer shaft 131 and the second outer shaft 132, the first inner shaft 133, the second inner shaft 134, and the movement prevention structure 601 fastened to the inner shafts 133 and 134 may be moved in the +y-axis or -y-axis direction with respect to the first outer shaft 131 and the second outer shaft 132.

For example, the second gear bracket 630 may be formed to be separate from a portion (e.g., 621 in FIG. 13) that is fastened to the end of the first outer shaft 131 in the -y-axis direction and a portion (e.g., 622 in FIG. 13) that is fastened to the end of the second outer shaft 132 in the -y-axis direction. For example, the second shaft bracket 650 may be formed to be separate from the first coupling member 661 that is fastened to the end of the first outer shaft 131 in the +y-axis direction and the second coupling member 662 that is fastened to the end of the second outer shaft 132 in the +y-axis direction. For example, the fixing member 670 may be formed to be separate from the first fixing portion 271 to which the end of the first outer shaft 131 in the +y-axis direction is fixed and the second fixing portion 272 to which the end of the second outer shaft 132 in the +y-axis direction is fixed.

In an embodiment, the second gear bracket 630 may be coupled to a first seating portion formed on the inner shafts 133 and 134. By connecting the second gear bracket 630 to the first seating portion, the interlocking gears 173 may not slip in the - y-axis direction even when the inner shafts 133 and 134 are moved in the -y-axis direction. In an embodiment, the second shaft bracket 650 may be coupled to a second seating portion formed on the inner shafts 133 and 134. By coupling the second shaft bracket 650 to the second seating portion, the second-third elastic member 123 and the second-fourth elastic member 124 may be compressed, and the elastic force in the +y-axis direction may be transmitted from the elastic members 123 and 124 to the second shaft bracket 650. FIG. 7 is a view illustrating an example of the first arm member, according to an embodiment.

Reference number <701> in FIG. 7 represents a view of the first arm member 410 when viewed obliquely from the +y-axis, and reference number <702> represents a view of the first arm member 410 when viewed obliquely from the -y-axis.

Referring to FIGS. 3A to 7, in an embodiment, the first arm member 410 may include the first arm body 414, the first arm portion 411, the second arm portion 412, and the first slide portion 413. The first arm body 414 may be disposed between each of the first arm portion 411 and the second arm portion 412 and the first slide portion 413. The first arm body 414 may connect the first arm portion 411 and the first slide portion 413, and may connect the second arm portion 412 and the first slide portion 413.

The first arm body 414 may transmit the force of the first slide portion 413 sliding (e.g., arc motion) on the first link member 310 to the first arm portion 411 and the second arm portion 412 in the process of folding or unfolding the electronic device 200. Alternatively, the first arm body 414 may transmit the rotational force of the first arm portion 411 and the second arm portion 412 to the first slide portion 413 while the first arm portion 411 and the second arm portion 412 are rotating with the rotation of the first outer shaft 131.

The first arm portion 411 may include a first arm surface 431 facing in one direction (e.g., the -y-axis direction), a second arm surface 432 facing in the opposite direction to the first arm surface 431, and a first outer surface 435 disposed between the first arm surface 431 and the second arm surface 432. For example, at least a portion of the first arm portion 411 may be formed as a hollow cylinder.

The first arm portion 411 may include a first arm hole 441 formed to pass through the first arm surface 431 and the second arm surface 432. The first arm portion 411 may be formed in a ring shape surrounding the first arm hole 441. The first arm hole 441 may have a diameter similar to the diameter of the first outer shaft 131 so that the first outer shaft 131 may be inserted thereinto. The first arm hole 441 may be formed in a shape corresponding to the outer diameter of the first outer shaft 131. The cross-sectional shape of the first arm hole 441 cut along the x-y plane may correspond to the cross-sectional shape of the first outer shaft 131 cut along the x-y plane. For example, when the cross-sectional shape of the first arm hole 441 cut along the x-y plane is circular, the cross-sectional shape of the first outer shaft 131 cut along the x-y plane may be circular. In an example, the first arm hole 441 of the first arm portion 411 may communicate with a second arm hole 442 formed in the second arm portion 412. In an example, the centers of the first arm hole 441 and the second arm hole 442 may be formed substantially identically to the first axis 101.

The second arm surface 432 may include the first-first cam structure 440 (e.g., a first-first rotation cam structure) disposed to face the second cam member 570. The first-first cam structure 440 may be formed on a surface facing the second cam member 570. The first-first cam structure 440 may have ridges and valleys disposed repeatedly. The ridge of the first-first cam structure 440 may be formed in a relief shape protruding toward the second cam member 570. The valley of the first-first cam structure 440 may be formed in a concave intaglio shape.

The second arm portion 412 may be formed to be spaced apart from the first arm portion 411 in the -y-axis direction. The first main gear 171 formed in a gear pattern may be formed on at least a portion of the outer surface of the second arm portion 412. The first main gear 171 may be formed in a shape in which the ridge and the valley are repeated along the circumference of a second circumferential surface 433. The first main gear 171 may be disposed to engage with the first interlocking gear 1731. A surface 434 of the second arm portion 412 facing the first arm surface 431 may include the first-second cam structure 450 disposed to face the first cam member 560. The first-second cam structure 450 may have ridges and valleys disposed repeatedly. The ridge of the first-second cam structure 450 may be formed in a relief shape protruding toward the first cam member 560. The valley of the first-second cam structure 450 may be formed in a concave intaglio shape. The first-second cam structure 450 may perform the cam operation with the rotation of the first arm member 410 in a state of being pressed by the first-first elastic member 111 and/or the second-first elastic member 121.

For example, while the electronic device 200 is folded at a specified angle (e.g., an angle greater than 0 degrees and less than 180 degrees), a protruding portion of the shape of the first-first cam structure 440 may engage with a protruding portion of the second cam member 570, and a protruding portion of the first-second cam structure 450 may engage with a protruding portion of the first cam member 560. While an upper portion (e.g., the top portion of the ridge) of the first-first cam structure 440 and an upper portion (e.g., the top portion of the ridge) of the second cam member 570 are in contact and an upper portion (or the top portion of the ridge) of the first-second cam structure 450 and an upper portion (or the top portion of the ridge) of the first cam member 560 are maintained in contact, a compression amount of the first-first elastic member 111 and/or the second-first elastic member 121 and a compression amount of the first-second elastic member 112 and/or the second-second elastic member 122 may be maintained at a certain size or greater. The frictional force generated in surrounding structures (e.g., the cam members 560 and 570 or the cam structures 440 and 450) to which the elastic force (e.g., the restoring force) due to the compression of the elastic members is applied may contribute to maintaining the electronic device 200 in the folded state of the specified angle.

According to an embodiment, the second arm member 420 may be formed in a shape substantially identical to or similar to the first arm member 410. For example, the second arm member 420 may include the second arm body 424, the third arm portion 421, the fourth arm portion 422, and the second slide portion 423. The third arm portion 421 may include the second-first cam structure 460, and the fourth arm portion 422 may include the second-second cam structure 470. The second arm body 424 may correspond to the first arm body 414 of the first arm member 410, the third arm portion 421 may correspond to the first arm portion 411 of the first arm member 410, the fourth arm portion 422 may correspond to the second arm portion 412 of the first arm member 410, and the second slide portion 423 may correspond to the first slide portion 413 of the first arm member 410. The second-first cam structure 460 may correspond to the first-first cam structure 440, and the second-second cam structure 470 may correspond to the first-second cam structure 450. Accordingly, the detailed structure of the second arm member 420 may be understood with reference to the description of the detailed structure of the first arm member 410.

FIG. 8 is a view illustrating an example of the gear bracket included in the movement prevention structure, according to an embodiment.

Reference number <801> in FIG. 8 represents a view of the second gear bracket 630 when viewed obliquely from the +y-axis, and reference number <802> represents a view of the second gear bracket 630 when viewed from the +z-axis.

Referring to FIGS. 6 to 8, in an embodiment, insertion holes 634 and 635 may be formed in the second gear bracket 630 so that the first inner shaft 133 and the second inner shaft 134 may pass therethrough. For example, the second gear bracket 630 may include a third insertion hole 634 and a fourth insertion hole 635 formed through one surface facing the interlocking gears 173 (e.g., a surface facing the +y-axis) to an opposite surface (e.g., a surface facing the -y-axis). The first inner shaft 133 may be inserted into the third insertion hole 634, and a third insertion hole surface 6341 may come into contact with the outer surface of the first inner shaft 133. The second inner shaft 134 may be inserted into the fourth insertion hole 635, and a fourth insertion hole surface 6351 may come into contact with the outer surface of the second inner shaft 134.

At least one surface of the second gear bracket 630 may be formed to correspond to a portion of the shape of the interlocking gears 173. For example, the second gear bracket 630 may include a first central portion 631 and extension portions 632 and 633 extending from the first central portion 631 to both sides (e.g., in the +x-axis direction and the -x-axis direction). A first extension portion 632 in which the third insertion hole 634 of the second gear bracket 630 is formed may be in contact with the first interlocking gear 1731, and the second extension portion 633 in which the fourth insertion hole 635 is formed may be in contact with the second interlocking gear 1732. For example, each of the first extension portion 632 and the second extension portion 633 may be formed to be at least partially similar to an upper surface (e.g., a surface facing the -y-axis) of the first interlocking gear 1731 and an upper surface of the second interlocking gear 1732. In an example, corresponding to a width (e.g., a width in the z-axis direction) of the connecting portion of the first interlocking gear 1731 and the second interlocking gear 1732 being formed to be the smallest, a width (e.g., a width in the z-axis direction) of the first central portion 631 of the second gear bracket 630 may be formed to be smaller than a width (e.g., a width in the z-axis direction) of the extension portions 632 and 633. In an embodiment, one surface of the second gear bracket 630 facing the +y-axis and one surface thereof facing the -y-axis may be formed to be flat.

In an embodiment, the second gear bracket 630 may be disposed between a coupling member (e.g., a third coupling member 621 in FIG. 13) fastened to the first outer shaft 131 and a coupling member (e.g., a fourth coupling member 622 in FIG. 13) fastened to the second outer shaft 132. The second gear bracket 630 may be spaced apart from the third coupling member 621 in the -x-axis direction by a predetermined interval and may be spaced apart from the fourth coupling member 622 in the +x-axis direction by a predetermined interval. Alternatively, the second gear bracket 630 may be separately formed on the x-axis so as not to cause friction and/or wear due to contact with the third coupling member 621 and the fourth coupling member 622. For example, the first extension portion 632 of the second gear bracket 630 may be formed so as not to come into contact with the third coupling member 621, and the second extension portion 633 may be formed so as not to come into contact with the fourth coupling member 622. The second gear bracket 630 into which the first inner shaft 133 and the second inner shaft 134 are inserted is formed separately from the coupling members 621 and 622 into which the first outer shaft 131 and the second outer shaft 132 are inserted, so that the inner shafts 133 and 134 may be moved separately from the outer shafts 131 and 132.

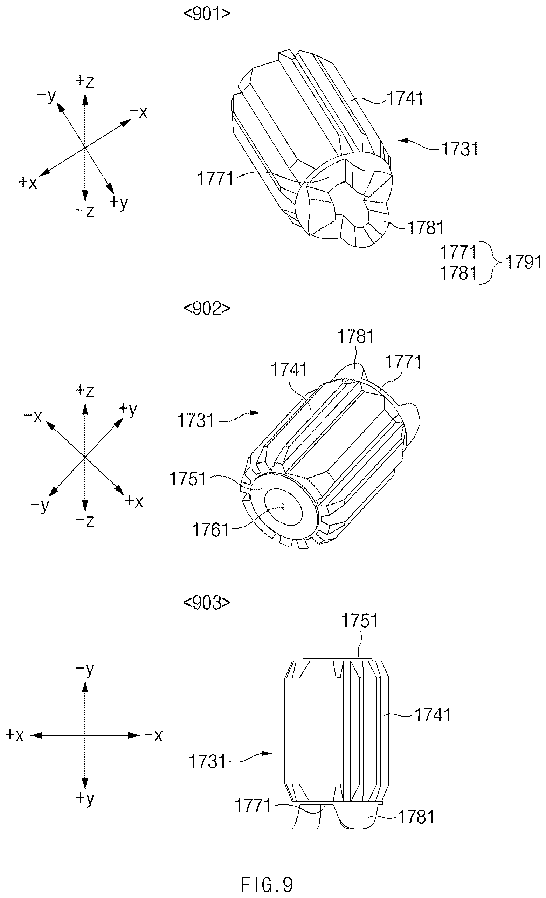

FIG. 9 is a view illustrating an example of the interlocking gear of the hinge assembly, according to an embodiment.

Reference number <901> in FIG. 9 represents a view of the first interlocking gear 1731 when viewed obliquely in the +y-axis direction, reference number <902> represents a view of the first interlocking gear 1731 when viewed obliquely in the -y-axis direction, and reference number <903> represents a view of the first interlocking gear 1731 when viewed in the +z-axis direction.

Referring to FIGS. 6 to 9, in an embodiment, the interlocking gears 173 may include gear surfaces that engage with the main gears 171 and 172 and a third cam structure that contacts the first cam member 560. For example, the first interlocking gear 1731 may include a first gear surface 1741 formed to engage with the first main gear 171, a surface 1751 that contacts the second gear bracket 630, and the third cam structure 1791 that contacts the first cam member 560. The first gear surface 1741 may be formed in a shape in which a ridge (e.g., a protruding portion) and a valley (e.g., a recessed portion) are repeated along the circumference of the circumferential surface of the first interlocking gear 1731. The first gear surface 1741 may be formed to engage with the second circumferential surface 433 of the second arm portion 412, and the first interlocking gear 1731 may be rotated corresponding to the rotation of the first arm member 410. The surface 1751 of the first interlocking gear 1731 facing the -y-axis may be formed in a shape corresponding to one surface of the second gear bracket 630 facing the +y-axis. For example, the surface 1751 of the first interlocking gear 1731 may be formed to be flat. A first hole 1761 into which the first inner shaft 133 may be inserted may be formed in the surface 1751 of the first interlocking gear 1731. The first hole 1761 may be formed to pass through the first interlocking gear 1731 from the -y-axis to the +y-axis.

The third cam structure 1791 may be formed on a surface of the first interlocking gear 1731 facing the +y-axis. The third cam structure 1791 may include a valley 1771 and a ridge 1781 that protrudes in the +y-axis direction relative to the valley 1771. For example, the third cam structure 1791 may be formed by repeating the valley 1771 and the ridge 1781. The third cam structure 1791 may be in contact with the first cam portion of the first cam member 560 (e.g., a first-third cam portion 563 in FIG. 10). For example, while an electronic device (e.g., the electronic device 200 in FIG. 1A) is maintained in a folded state of a specified angle, a contact state between the ridge 1781 of the third cam structure 1791 and a third ridge (e.g., a third ridge 553 in FIG. 10) of the first-third cam portion 563 may be maintained. The second interlocking gear 1732 may be formed in a shape substantially identical to or similar to the first interlocking gear 1731, and reference may be made to the description provided with respect to the first interlocking gear 1731. For example, the second interlocking gear 1732 may include a second gear surface formed to engage with the second main gear 172, one surface that comes into contact with the second gear bracket 630, and a fourth cam structure (e.g., the fourth cam structure 1792 in FIG. 13) that comes into contact with the first cam member 560. The second gear surface may correspond to the first gear surface 1741 of the first interlocking gear 1731, and the fourth cam structure may correspond to the third cam structure 1791 of the first interlocking gear 1731.

FIG. 10 is a view illustrating an example of the cam member of the hinge assembly, according to an embodiment.

Reference number <1001> in FIG. 10 represents a view of the first cam member 560 when viewed from the +z-axis, and reference number <1002> represents a view of the first cam member 560 when viewed obliquely from the -y-axis.

Referring to FIGS. 6 to 10, in an embodiment, the first cam member 560 may include at least one first cam portion formed in a cam shape. For example, the first cam member 560 may include first cam portions in which ridges (e.g., portions protruding in the -y-axis) and valleys (e.g., portions recessed in the +y-axis, or portions formed to be flat) repeatedly appear on one surface (e.g., a surface facing the -y-axis). For example, the first cam member 560 may include the first-first cam portion 561 including a first ridge 551 and a first valley 541, a first-second cam portion 562 including a second ridge 552 and a second valley 542, a first-third cam portion 563 including a third ridge 553 and a third valley 543, and a first-fourth cam portion 564 including a fourth ridge 554 and a fourth valley 544. In an example, a first through hole 566 into which the first outer shaft 131 is inserted may be formed in the first-first cam portion 561, a second through hole 567 into which the second outer shaft 132 is inserted may be formed in the first-second cam portion 562, a third through hole 568 into which the first inner shaft 133 is inserted may be formed in the first-third cam portion 563, and a fourth through hole 569 into which a second inner shaft 134 is inserted may be formed in the first-fourth cam portion 564. In an embodiment, the first cam portions 561, 562, 563, and 564 may be at least partially connected to one another to be integrally formed.

The first-first cam portion 561 may come into contact with the first-second cam structure 450 formed on the second arm portion 412 of the first arm member 410. For example, the first ridge 551 and a protruding portion of the first-second cam structure 450 may come into contact to generate at least a portion of the first frictional force. The first-second cam portion 562 may come into contact with the second-second cam structure (e.g., the second-second cam structure 470 in FIG. 13) formed on the fourth arm portion 422 of the second arm member 420. For example, protruding portions of the second ridge 552 and the second-second cam structure 470 may come into contact to generate at least a portion of the first frictional force. The first-third cam portion 563 may come into contact with the third cam structure 1791 formed on the first interlocking gear 1731. For example, the third ridge 553 and the ridge 1781 of the third cam structure 1791 may come into contact to generate at least a portion of the first frictional force. The first-fourth cam portion 564 may come into contact with the fourth cam structure (e.g., the fourth cam structure 1792 in FIG. 13) formed on the second interlocking gear 1732. For example, the fourth ridge 554 and the ridge of the fourth cam structure 1792 may come into contact to generate at least a portion of the first frictional force. The first frictional force generated by the contact between the first cam portions 561, 562, 563, and 564 of the first cam member 560 and each of the first-second cam structure 450, the second-second cam structure 470, the third cam structure 1791, and the fourth cam structure 1792 may be used to maintain the folding angle of an electronic device (e.g., the electronic device 200 in FIG. 1A). In order to stably maintain the folded state of the electronic device 200 at the specified angle, the contact between the first cam portions 561, 562, 563, and 564 and the cam structures (e.g., the first cam structure, the second cam structure, and the third cam structure) and resulting occurrence of frictional force have to be constantly maintained. The movement prevention structure 601 allows the first inner shaft 133 and the second inner shaft 134 to be moved in the +y-axis or -y-axis direction to constantly maintain the contact and frictional force, and this will be described below in FIGS. 13 to 15.

In an embodiment, the operation of folding or unfolding the electronic device 200 may be associated with the cam operation (e.g., engagement of the cam members 560 and 570 and the cam structures 440, 450, 460, 470, 1791, and 1792) of the hinge assembly (e.g., the first hinge assembly 240). For example, the contact area of the first cam portions 561, 562, 563, and 564 of the first cam member 560 and the cam structures 450, 470, 1791, and 1792 contacting the first cam member 560 may vary depending on the state of the electronic device 200. In an example, in the unfolded state of the electronic device 200, the first cam portions and the cam structures may at least partially come into contact. Alternatively, for example, during the unfolded state of the electronic device 200, the ridges 551, 552, 553, and 554 of the first cam portions (e.g., the portions protruding in the -y-axis) and the ridge portions of the cam structures (e.g., the portions protruding in the +y-axis) may be spaced apart by a predetermined interval. In an example, while the electronic device 200 is being folded from the unfolded state to a specified first angle (e.g., a specific angle between 0 degrees and 180 degrees), the contact area of the ridges of the first cam portions and the ridge portions of the cam structures may gradually increase, and accordingly, the first frictional force may be increased. During the folded state of the electronic device 200 at the first angle, the first frictional force may act as a resistance force against an unfolding force (e.g., a restoring force) of the electronic device 200. For example, during the folded state of the first angle, the contact area of the ridges of the first cam portions and the ridge portions of the cam structures and the first frictional force may be maximum. In an example, while the electronic device 200 is fully folded from the folded state of the specified first angle, the contact area of the ridges of the first cam portions and the ridge portions of the cam structures may be reduced. For example, during the folded state of the electronic device 200, the contact area between the ridges of the first cam portions and the ridge portions of the cam structures may be minimal.

In an embodiment, the valleys 541, 542, 543, and 544 of the cam members 560 and 570 or the valley portions of the cam structures 440, 450, 460, and 470 may be formed to facilitate the unfolding and folding operations of the electronic device 200. For example, in the folded state of the electronic device 200 at a second angle other than the specified first angle, the ridges of the cam structures may each move along the valleys of the cam members. For example, when a certain level of external force is applied to the electronic device 200 in the folded state of the second angle, the ridge portion (e.g., the portion protruding in the +y-axis) of the first-second cam structure 450 may be moved along the first valley 541 of the first cam member 560, and the ridge portion (e.g., the portion protruding in the +y-axis) of the second-second cam structure 470 may be moved along the second valley 542 of the first cam member 560. As the ridge portions of the cam structures 440, 450, 460, and 470 are moved along the valleys of the cam members 560 and 570, the first frictional force or the second frictional force may be reduced, and the state of the electronic device 200 may be changed to the unfolded state or the folded state. As a gap between the cam member (e.g., the first cam member 560) and the cam structure (e.g., the first-second cam structure 450, the second-second cam structure 470, the third cam structure 1791, or the fourth cam structure 1792) is prevented by the movement prevention structure 601, the operation of the cam structure may be smoothly performed. For example, when the electronic device 200 is unfolded or folded, when the contact state between the ridge portions of the cam structures and the valley portions of the cam members is maintained, the electronic device 200 may be unfolded or folded with relatively little force. For example, when an external force is applied to the electronic device 200 and the ridge portions of the cam structures and the valley portions of the cam members come into contact, the ridge portions of the cam structures are moved from a high portion of the valley portions formed to be curved toward a low portion, allowing the electronic device 200 to be smoothly unfolded or folded.

FIG. 11 is a view illustrating an example of the shaft bracket included in the movement prevention structure, according to an embodiment.

Reference number <1101> in FIG. 11 represents a view of the second shaft bracket 650 when viewed obliquely from the +y-axis, and reference number <1102> represents a view of the second shaft bracket 650 when viewed from the +z-axis.

Referring to FIGS. 6 to 11, in an embodiment, insertion holes 654 and 655 may be formed in the second shaft bracket 650 so that the first inner shaft 133 and the second inner shaft 134 may pass therethrough. For example, the second shaft bracket 650 may include a seventh insertion hole 654 and an eighth insertion hole 655 formed to pass through from one surface facing the fixing member 670 (e.g., the surface facing the +y-axis) to the opposite surface (e.g., the surface facing the -y-axis). The first inner shaft 133 may be inserted into the seventh insertion hole 654, and a seventh insertion hole surface 6541 may come into contact with the outer surface of the first inner shaft 133. The second inner shaft 134 may be inserted into the eighth insertion hole 655, and an eighth insertion hole surface 6551 may come into contact with the outer surface of the second inner shaft 134.

At least one surface of the second shaft bracket 650 may be formed to correspond to a portion of the shape of a second elastic assembly (e.g., the second elastic assembly 120 in FIG. 5). For example, the second shaft bracket 650 may include a second central portion 651 and extension portions 652 and 653 extending from the second central portion 651 to both sides (e.g., in the +x-axis direction and the -x-axis direction). The third extension portion 652 in which the seventh insertion hole 654 of the second shaft bracket 650 is formed may come into contact with the second-third elastic member 123, and the fourth extension portion 653 in which the eighth insertion hole 655 is formed may come into contact with the second-fourth elastic member 124. For example, each of the third extension portion 652 and the fourth extension portion 653 may be formed at least partially similarly to a lower surface (e.g., a surface facing the +y-axis) of the second-third elastic member 123 and a lower surface (e.g., a surface facing the +y-axis) of the second-fourth elastic member 124. In an example, corresponding to a width (e.g., a width in the z-axis direction) of the contact portions of the second-third elastic member 123 and the second-fourth elastic member 124 being formed to be the smallest, a width (e.g., a width in the z-axis direction) of the second central portion 651 of the second shaft bracket 650 may be formed to be smaller than widths (e.g., widths in the z-axis direction) of the extension portions 652 and 653. In an embodiment, one surface facing the +y-axis and one surface facing the -y-axis of the second shaft bracket 650 may be formed to be flat.

The second shaft bracket 650 may be disposed between the coupling members 661 and 662. For example, the second shaft bracket 650 may be disposed between the first coupling member 661 fastened to the first outer shaft 131 and the second coupling member 662 fastened to the second outer shaft 132. The second shaft bracket 650 may be spaced apart from the first coupling member 661 in the -x-axis direction by a predetermined interval and may be spaced apart from the second coupling member 662 in the +x-axis direction by a predetermined interval. Alternatively, the second shaft bracket 650 may be formed separately on the x-axis so as not to cause friction and/or wear due to contact with the first coupling member 661 and the second coupling member 662. For example, the third extension portion 652 of the second shaft bracket 650 may be formed so as not to come into contact with the first coupling member 661, and the fourth extension portion 653 may be formed so as not to come into contact with the second coupling member 662. The second shaft bracket 650 into which the first inner shaft 133 and the second inner shaft 134 are inserted is formed separately from the coupling members 661 and 662 into which the first outer shaft 131 and the second outer shaft 132 are inserted, so that the inner shafts 133 and 134 may be moved separately from the outer shafts 131 and 132.

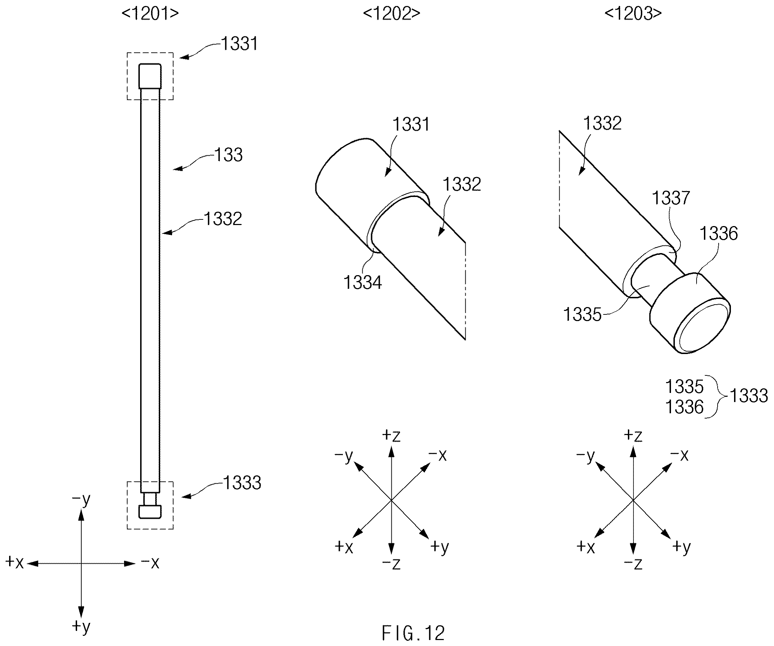

FIG. 12 is a view illustrating an example of a shaft of the hinge assembly, according to an embodiment.

Reference number <1201> in FIG. 12 represents a view of the first inner shaft 133 as viewed from the +z-axis, reference number <1202> represents an enlarged view of a -y-axis end of the first inner shaft 133, and reference number <1203> represents an enlarged view of a +y-axis end of the first inner shaft 133.

Referring to FIGS. 6 to 12, in an embodiment, the first inner shaft 133 may include at least one step structure (e.g., an interlocking structure, a fastening structure, a bending structure, or a convex-concave structure). For example, the first inner shaft 133 may include a first step structure (e.g., a first stepped portion) on which the second gear bracket 630 is seated and a second step structure (e.g., a second stepped portion) on which the second shaft bracket 650 is seated. For example, the first inner shaft 133 may include a rod 1332 formed to extend in a first direction (e.g., in the +y-axis direction), a first stepped portion 1331 formed at one end of the rod 1332 facing the -y-axis, and a second stepped portion 1333 formed at one end thereof facing the +y-axis.

At least one surface of the second gear bracket 630 may be supported on the first stepped portion 1331. For example, the first stepped portion 1331 may have a diameter greater than a diameter of the rod 1332. The first stepped portion 1331 may be formed to protrude further than the rod 1332 from the center of the rod 1332 (e.g., the center of the first inner shaft 133). For example, the first stepped portion 1331 may include a first step surface 1334 that protrudes outwardly from the rod 1332. The first step surface 1334 may be formed to be perpendicular to the outer surface of the rod 1332 and may come into contact with the surface of the second gear bracket 630 facing the -y-axis. For example, the second gear bracket 630 may be supported on the first step surface 1334 of the first inner shaft 133 in a state in which the first inner shaft 133 is inserted. For example, a diameter of the third insertion hole 634 formed in the first extension portion 632 of the second gear bracket 630 may be formed to be greater than a diameter of the rod 1332 and smaller than a diameter of the first step surface 1334. The surface of the first extension portion 632 facing the -y-axis may come into contact with the first step surface 1334. By limiting the movement (e.g., movement in the -y-axis direction) of the second gear bracket 630 on the first inner shaft 133 by forming the first stepped portion 1331, the movement of the first interlocking gear 1731 in contact with the second gear bracket 630 may also be limited. As the movement of the first interlocking gear 1731 in the -y-axis direction is limited, the separation of the first interlocking gear 1731 and the first cam member 560 may be prevented.

At least one surface of the second shaft bracket 650 may be supported by the second stepped portion 1333. For example, the second stepped portion 1333 may include a seating portion 1335 formed to be smaller than the diameter of the rod 1332 and a fixing portion 1336 formed with a diameter greater than the seating portion 1335. For example, the seating portion 1335 may be formed to be recessed from the center of the rod 1332 (e.g., the center of the first inner shaft 133) further than the rod 1332, and the fixing portion 1336 may be formed to protrude from the center of the rod 1332 further than the rod 1332. By forming the seating portion 1335, a second step surface 1337 connected to the seating portion 1335 may be formed on the first inner shaft 133. A third step surface may be formed on a surface (e.g., a surface facing the -y-axis) that is connected to the seating portion 1335 of the fixing portion 1336. The second step surface 1337 and the third step surface may be formed perpendicular to an outer surface of the seating portion 1335. The second step surface 1337 may come into contact with the surface of the second shaft bracket 650 facing the -y-axis, and the third step surface may come into contact with the surface of the second shaft bracket 650 facing the +y-axis. For example, the second shaft bracket 650 may be supported between the second step surface 1337 and the third step surface after the seating portion 1335 is inserted. For example, a diameter of the seventh insertion hole 654 formed in the third extension portion 652 of the second shaft bracket 650 may be formed to be greater than a diameter of the seating portion 1335 and smaller than a diameter of the fixing portion 1336. For example, the surface of the third extension portion 652 facing the -y-axis may come into contact with the second step surface 1337, and the surface thereof facing the +y-axis may come into contact with the third step surface. In an embodiment, the second shaft bracket 650 may be formed of an elastic material. For example, the second shaft bracket 650 may be deformed (e.g., tensioned) to pass through the fixing portion 1336, and then restored to its original shape (e.g., compressed) after passing through the fixing portion 1336 and fixed to the seating portion 1335. In an embodiment, the second shaft bracket 650 may be fixed to the first inner shaft 133 through the fixing member 670. For example, the fixing member 670 may be disposed on the seating portion 1335 together with the second shaft bracket 650 to support the second shaft bracket 650 in the -y-axis direction.

The movement (e.g., movement in the +y-axis direction) of the second shaft bracket 650 on the first inner shaft 133 may be limited by the formation of the second stepped portion 1333. For example, as the second shaft bracket 650 is fixed to the seating portion 1335, the elastic force of the second elastic assembly (e.g., the second-third elastic member 123) may be transmitted to the seating portion 1335 through the second shaft bracket 650. The elastic force transmitted to the seating portion 1335 may be transmitted to the first interlocking gear 1731 through the second shaft bracket 650, and may act as a driving force for moving the first interlocking gear 1731.

The shapes of the first stepped portion 1331 and the second stepped portion 1333 are not limited to those described above and may be formed in various shapes. For example, the first stepped portion 1331 or the second stepped portion 1333 may be formed in a corresponding shape to be able to engage with the second gear bracket 630 or the second shaft bracket 650. For example, the first stepped portion 1331 may have a shape in which a ridge is formed, and the second gear bracket 630 may have a shape in which a valley is formed. For example, the first stepped portion 1331 and the second gear bracket 630 may have slopes (e.g., inclined surfaces) formed to engage with each other. For example, a convex-concave structure that enables coupling may be formed on the first stepped portion 1331 and the second gear bracket 630. The shape of the second inner shaft 134 may be formed to be substantially identical to as or similar to the shape of the first inner shaft 133. For the second inner shaft 134, reference may be made to the description provided with respect to the first inner shaft 133, and any repeated description thereof is omitted.

FIG. 13 is a perspective view illustrating a coupling relationship between components of the movement prevention structure and the hinge assembly, according to an embodiment.

Referring to FIGS. 6 to 13, in an embodiment, the first hinge assembly 240 may include the movement prevention structure 601 configured so that contact surfaces of the cam structures formed on the first arm member 410 and the second arm member 420, the cam structures formed on the first interlocking gear 1731 and the second interlocking gear 1732, and the cam portions formed on the first cam member 560 are maintained. The movement prevention structure 601 may include the second gear bracket 630, the second shaft bracket 650, and the fixing member 670.

The first-second cam structure 450 formed on the second arm portion 412 of the first arm member 410, the second-second cam structure 470 formed on the fourth arm portion 422 of the second arm member 420, the third cam structure 1791 of the first interlocking gear 1731, and the fourth cam structure 1792 of the second interlocking gear 1732 may form a first contact surface S1 that comes into contact with the first cam member 560. Through the first contact surface S1, a frictional force may be applied to the hinge assembly 240 in a direction opposite to the rotational direction during the rotation of the first arm member 410 and the second arm member 420. For example, the first contact surface S1 may include a first contact point of the first-second cam structure 450 and the first-first cam portion 561, a second contact point of the second-second cam structure 470 and the first-second cam portion 562, a third contact point of the third cam structure 1791 and the first-third cam portion 563, and a fourth contact point of the 4th cam structure 1792 and the first-fourth cam portion 564. At each of the contact points, the frictional force may be generated by the engagement of the cam shapes.

In an embodiment, the movement prevention structure 601 may be configured so that the first to fourth contact points (hereinafter, contact points) may be maintained. For example, the second gear bracket 630 may come into contact with the interlocking gears 173 in a state in which the contact portions are maintained. For example, the second gear bracket 630 may form the second contact surface S2 with the interlocking gears. For example, the first step surface 1334 of the first inner shaft 133 on which the second gear bracket 630 is seated may be formed at an appropriate position so that the contact points may be maintained, and a second contact surface S2 may be formed from the second gear bracket 630 seated on the first step surface 1334 and the interlocking gears.

In addition, as an example, the second shaft bracket 650 may come into contact with the second-third elastic member 123 and the second-fourth elastic member 124 in the state in which the contact points are maintained. For example, the second shaft bracket 650 may be seated on the first inner shaft 133 and the second inner shaft 134 so that the second-third elastic member 123 and the second-fourth elastic member 124 maintain a compressed state to a certain level. For example, the second shaft bracket 650 may be fixed to the second inner shaft 134 through the fixing member 670. The second shaft bracket 650 may form a third contact surface S3 with the second-third elastic member 123 and the second-fourth elastic member 124.

Preferably, the first interlocking gear 1731 or the second interlocking gear 1732 may be formed to have substantially the same size as the first main gear of the second arm portion 412 (e.g., the first main gear 171 in FIG. 5) or the second main gear of the fourth arm portion 422 (e.g., the second main gear 172 in FIG. 5). In this case, the second gear bracket 630 may form the second contact surface S2 by contacting the upper surfaces (e.g., surfaces facing the -y-axis) (e.g., 1751 in FIG. 9) of the first interlocking gear 1731 and the second interlocking gear 1732 in the state in which the first contact surface S1 is maintained (e.g., the contact points are maintained). The second contact surface S2 may form a plane substantially identical to a lower surface (e.g., a surface facing the +y-axis) of the third coupling member 621 into which the first outer shaft 131 is inserted or the fourth coupling member 622 into which the second outer shaft 132 is inserted. In addition, the second shaft bracket 650 may form the third contact surface S3 by contacting lower surfaces (e.g., surfaces facing the +y-axis) of the second-third elastic member 123 and the second-fourth elastic member 124 in the state in which the first contact surface S1 and the second contact surface S2 are maintained. The third contact surface S3 may form a plane substantially identical to upper surfaces

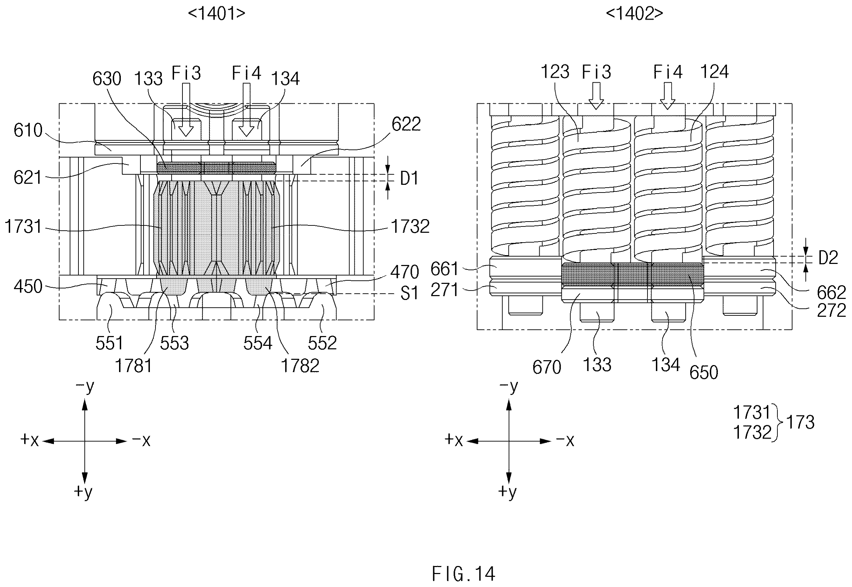

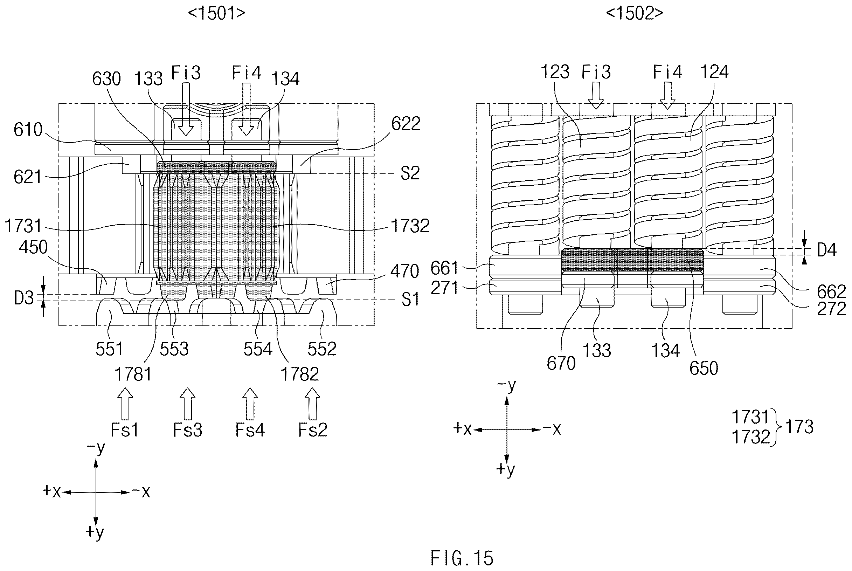

(e.g., surfaces facing the -y-axis) of the first coupling member 661 into which the first outer shaft 131 is inserted and the second coupling member 662 into which the second outer shaft 132 is inserted. In FIGS. 14 and 15, a case where the first interlocking gear 1731 or the second interlocking gear 1732 is formed to be smaller or greater than the first main gear 171 or the second main gear 172 will be described below.

In an embodiment, the hinge assembly 240 may include at least one bracket that maintains alignment of the shafts 131, 132, 133, and 134 while the first inner shaft 133 and the second inner shaft 134 are moving. For example, the hinge assembly 240 may include the first gear bracket 610 that accommodates at least some of ends of the shafts facing the -y-axis and the first shaft bracket 270 that accommodates at least some of ends of the shafts facing the +y-axis. In an example, the first gear bracket 610 may be coupled to a portion of a fixing bracket (e.g., the fixing bracket 530 in FIG. 5), and the first shaft bracket 270 may be coupled to a portion of a hinge housing (e.g., the hinge housing 250 in FIG. 2).

FIG. 14 is a view illustrating an example of a state in which a force is transmitted to the movement prevention structure in the first direction, according to an embodiment.

Reference number <1401> in FIG. 14 represents an example in which the interlocking gears are formed to be smaller than the main gears, and reference number <1402> represents a view in which the first inner shaft 133 and the second inner shaft 134 are moved in the +y-axis direction.

Referring to FIGS. 13 and 14, in an embodiment, the interlocking gears 173 may be formed to be smaller than main gears (e.g., the first main gear 171 and the second main gear 172 in FIG. 5). For example, compared to a preferred form of the interlocking gears 173 (e.g., the form of the first interlocking gear 1731 or the second interlocking gear 1732 illustrated in FIG. 13) (hereinafter, a normal state), the interlocking gears 173 may have a negative (-) dimensional deviation (hereinafter, a negative deviation). For example, the width of the first interlocking gear 1731 in the +y-axis direction may be formed to be smaller than the width of the first main gear 171 in the +y-axis direction. Due to the negative deviation, the second gear bracket 630 may be spaced apart from the interlocking gears 173 by a first interval D1 (e.g., a first gap). For example, when the interlocking gears 173 and the first cam member 560 come into contact to form the first contact surface S1, the second gear bracket 630 may be disposed at a place spaced apart from the interlocking gears 173 by the first interval D1 in the -y-axis direction. The interlocking gears 173 may move along the first inner shaft 133 or the second inner shaft 134 in the space between the second gear bracket 630 and the first cam member 560. For example, when an electronic device (e.g., the electronic device 200 in FIG. 1A) is folded and/or unfolded, the interlocking gears 173 may be minutely moved in the +y-axis or -y-axis with the rotation of the first arm member 410 and the second arm member 420. The movement of the interlocking gears 173 may cause loss of contact between the interlocking gears 173 and the first cam member 560. For example, the interlocking gears 173 may be moved to contact the second gear bracket 630 and spaced apart from the first cam member 560 by the first interval D1. The frictional force that may be generated between the cam structures 1791 and 1792 of the interlocking gears 173 and the first cam portions 563 and 564 of the first cam member 560 may be lost, and the overall frictional force generated in the hinge assembly 240 when the electronic device 200 is folded and/or unfolded may be reduced.

The movement prevention structure 601 may support the interlocking gears 173 in the first direction (e.g., the +y-axis direction) so that the first to fourth contact points are maintained. The movement prevention structure 601 may be configured to be moved in the +y-axis or -y-axis direction together with the first inner shaft 133 and the second inner shaft 134. For example, the second gear bracket 630, the second shaft bracket 650, and the fixing member 670 may be coupled to fixing positions of the inner shafts 133 and 134 and moved integrally with the inner shafts 133 and 134.

Specifically, in an embodiment, a lower elastic member (e.g., the second elastic assembly 120 in FIG. 5) may be disposed in a compressed form between the second cam member 570 and the second shaft bracket 650 to apply an elastic force to the second shaft bracket 650 in the first direction (e.g., the +y-axis direction). For example, to the second shaft bracket 650, a first lower elastic force Fi3 in the +y-axis direction may be applied from the second-third elastic member 123 of the lower elastic member, and a second lower elastic force Fi4 in the +y-axis direction may be applied from the second-fourth elastic member 124. The second shaft bracket 650 may be fixed (or coupled) to the first inner shaft 133 and the second inner shaft 134 together with the fixing member 670. The lower elastic forces Fi3 and Fi4 applied to the second shaft bracket 650 may be transmitted to the first inner shaft 133 and the second inner shaft 134, respectively. The first inner shaft 133 and the second inner shaft 134 may be moved in the +y-axis direction by the lower elastic forces transmitted to the first inner shaft 133 and the second inner shaft 134. When the inner shafts 133 and 134 are moved, the second gear bracket 630, the second shaft bracket 650, and the fixing member 670 may be moved together in the +y-axis direction. The inner shafts may be moved by the lower elastic forces until the interlocking gears 173 come into contact with the first cam member 560. For example, the interlocking gears 173 may be supported in the +y-axis direction by the second gear bracket 630 that are moved together with the inner shafts. The first interval D1 formed between the second gear bracket 630 and the interlocking gears 173 may be reduced or eliminated by the lower elastic forces. By the lower elastic forces, the interlocking gears 173 come into contact with the first cam member 560, so that in addition to the first contact point and the second contact point, the third contact point and the fourth contact point may be formed. Through the first contact surface S1 formed by the contact points, maximum frictional force may be implemented in the process of folding and/or unfolding the electronic device 200.

For example, the frictional force generated at the first contact surface S1 may include a frictional force due to contact between the first-second cam structure 450 and the first ridge 551 of the first-first cam portion 561, a frictional force due to contact between the second-second cam structure 470 and the second ridge 552 of the first-second cam portion 562, a frictional force due to contact between the ridge 1781 of the third cam structure 1791 and the third ridge 553 of the first-third cam portion 563, and a frictional force due to contact between a ridge 1782 of the fourth cam structure 1792 and the fourth ridge 554 of the first-fourth cam portion 564.

In an embodiment, when the first contact surface S1 is formed by the lower elastic forces, the upper surface (e.g., the surface facing the -y-axis) of the second shaft bracket 650 may be positioned below (e.g., in the +y-axis direction) upper surfaces (e.g., surfaces facing the -y-axis) of the coupling members 661 and 662 on both sides (e.g., in the +x-axis and -x-axis directions) by a second interval D2. In addition, an upper surface (e.g., a surface facing the -y-axis) of the fixing member 670 may be positioned below (e.g., in the +y-axis direction) upper surfaces (e.g., surfaces facing the -y-axis) of the fixing portions 271 and 272 on both sides (e.g., in the +x-axis and -x-axis directions). For example, the second interval D2 may be substantially equal to the first interval D1.

FIG. 15 is a view illustrating an example of a state in which a force is transmitted to the movement prevention structure in the second direction, according to an embodiment.

Reference number <1501> in FIG. 15 represents an example in which the interlocking gears are formed to be larger than the main gears, and reference number <1502> is a view illustrating a state in which the first inner shaft 133 and the second inner shaft 134 are moved in the -y-axis direction.

Referring to FIGS. 13 to 15, in an embodiment, the interlocking gears 173 may be formed to be greater than main gears (e.g., the first main gear 171 and the second main gear 172 in FIG. 5). For example, compared to a preferred form of the interlocking gears 173 (e.g., the form of the first interlocking gear 1731 or the second interlocking gear 1732 illustrated in FIG. 13) (hereinafter, a normal state), the interlocking gears 173 may have a positive (+) dimensional deviation (hereinafter, a positive deviation). For example, the width of the first interlocking gear 1731 in the +y-axis direction may be formed to be greater than the width of the first main gear 171 in the +y-axis direction. Due to the positive deviation, the interlocking gears 173 may be formed to protrude further in the +y-axis direction than the main gears 171 and 172. For example, the surfaces of the interlocking gears 173 facing the -y-axis may come into contact with the second gear bracket 630 to form the second contact surface S2. The surfaces of the interlocking gears 173 facing the +y-axis may come into contact with the first cam member 560 to form the first contact surface S1. As the interlocking gears 173 are formed to be greater than the main gears 171 and 172, the first contact surface S1 may not include the first contact point and the second contact point. For example, the first cam member 560 may be pushed in the +y-axis direction by the interlocking gears 173, and accordingly, the first-second cam structure 450 and the second-second cam structure 470 may be spaced apart from the first cam member 560 by a third interval D3 (e.g., a second gap). As the first cam member 560 is pushed by the interlocking gears 173, an upper elastic member (e.g., the first elastic assembly 110 in FIG. 5) disposed between the first cam member 560 and the support bracket 800 may be compressed to a certain level.

As the third interval D3 occurs, contact between the first-second cam structure 450 and the second-second cam structure 470 and the first cam member 560 may be lost. The frictional force that may be generated between the cam structures 450 and 470 of the arm members 410 and 420 and the first cam portions 561 and 562 of the first cam member 560 may be lost, and the overall frictional force generated in the hinge assembly 240 when the electronic device 200 is folded and/or unfolded may be reduced.

The movement prevention structure 601 may support the interlocking gears 173 in the second direction (e.g., the -y-axis direction) so that the first to fourth contact points are maintained. For example, the second gear bracket 630, the second shaft bracket 650, and the fixing member 670 may be coupled to fixing positions of the inner shafts 133 and 134 and moved in the second direction (e.g., in the -y-axis direction) integrally with the inner shafts 133 and 134.

Specifically, in an embodiment, a lower elastic member (e.g., the second elastic assembly 120 in FIG. 5) may be disposed in a compressed form between the second cam member 570 and the second shaft bracket 650 to apply an elastic force to the second shaft bracket 650 in the first direction (e.g., the +y-axis direction). For example, to the second shaft bracket 650, a first lower elastic force Fi3 in the +y-axis direction may be applied from the second-third elastic member 123 of the lower elastic member, and a second lower elastic force Fi4 in the +y-axis direction may be applied from the second-fourth elastic member 124. The second shaft bracket 650 may be fixed (or coupled) to the first inner shaft 133 and the second inner shaft 134 together with the fixing member 670. The lower elastic forces Fi3 and Fi4 applied to the second shaft bracket 650 may be transmitted to the first inner shaft 133 and the second inner shaft 134.

At the same time, the upper elastic member (e.g., the first elastic assembly 110 in FIG. 5) compressed by pushing of the first cam member 560 in the +y-axis direction may apply an elastic force (e.g., a restoring force) to the first cam member 560 in the second direction (e.g., the -y-axis direction). For example, to the first cam member 560, a first upper elastic force Fs1 in the -y-axis direction from the first-first elastic member 111, a second upper elastic force Fs2 in the -y-axis direction from the first-second elastic member 112, a third upper elastic force Fs3 in the -y-axis direction from the first-third elastic member 113, and a fourth upper elastic force Fs4 in the -y-axis direction from the first-fourth elastic member 114 may be applied. The upper elastic forces Fs1, Fs2, Fs3, and Fs4 may be transmitted from the first cam member 560 to the interlocking gears 173 through the first contact surface S1, and from the interlocking gears 173 to the second gear bracket 630 through the second contact surface S2. The upper elastic force transmitted to the second gear bracket 630 may be transmitted to the first inner shaft 133 and the second inner shaft 134.

The first inner shaft 133 and the second inner shaft 134 may be moved in the -y-axis direction by the lower elastic forces and the upper elastic forces transmitted to the first inner shaft 133 and the second inner shaft 134. For example, the lower elastic forces transmitted to the inner shafts 133 and 134 may be offset by the upper elastic forces. For example, the elastic members (e.g., the first-first elastic member 111 to the first-fourth elastic member 114) that exert the upper elastic force may be disposed in greater numbers than the elastic members (e.g., the second-third elastic member 123 and the second-fourth elastic member 124) that exert the lower elastic force. Only a net force (e.g., a net force) of the upper elastic forces remaining after being offset by the lower elastic forces may be applied to the inner shafts 133 and 134, so that the inner shafts may be moved in the -y-axis direction.

When the inner shafts are moved, the second gear bracket 630, the second shaft bracket 650, and the fixing member 670 may be moved together in the -y-axis direction. The inner shafts may be moved by the net force until the first cam member 560 comes into contact with the first-second cam structure 450 and the second-second cam structure 470. For example, the interlocking gears 173 may be moved in the -y-axis direction in a state of being in contact with the second gear bracket 630 and the first cam member 560 that are moved together with the inner shafts. The third interval D3 formed between the cam structures 450 and 470 of the arm members 410 and 420 and the first cam member 560 may be reduced or eliminated by the net force. By the net force, the cam structures 450 and 470 of the arm member come into contact with the first cam member 560, so that in addition to the third contact point and the fourth contact point, the first contact point and the second contact point may be maintained. Through the first contact surface S1 formed by the contact points, maximum frictional force may be implemented in the process of folding and/or unfolding the electronic device 200.

For example, the frictional force generated at the first contact surface S1 may include a frictional force due to contact between the first-second cam structure 450 and the first ridge 551 of the first-first cam portion 561, a frictional force due to contact between the second-second cam structure 470 and the second ridge 552 of the first-second cam portion 562, a frictional force due to contact between the ridge 1781 of the third cam structure 1791 and the third ridge 553 of the first-third cam portion 563, and a frictional force due to contact between a ridge 1782 of the fourth cam structure 1792 and the fourth ridge 554 of the first-fourth cam portion 564.

In an embodiment, when the first contact surface S1 is formed by the net force, the upper surface (e.g., the surface facing the -y-axis) of the second shaft bracket 650 may be positioned above (e.g., in the -y-axis direction) upper surfaces (e.g., surfaces facing the -y-axis) of the coupling members 661 and 662 on both sides (e.g., in the +x-axis and 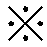 axis directions) by a fourth interval D4. In addition, an upper surface (e.g., a surface facing the -y-axis) of the fixing member 670 may be positioned above (e.g., in the -y-axis direction) upper surfaces (e.g., surfaces facing the -y-axis) of the fixing portions 271 and 272 on both sides (e.g., in the +x-axis and -x-axis directions). For example, the fourth interval D4 may be substantially the same as the third interval D3.

The movement prevention structure 601 according to an embodiment and the first inner shaft 133 and the second inner shaft 134 coupled thereto may be formed to be separately movable from the first outer shaft 131 and the second outer shaft 132. The movement prevention structure 601 may be operatively disposed with the elastic members (e.g., the first elastic assembly 110 and the second elastic assembly 120) so that the elastic forces may be transmitted to the inner shafts 133 and 134. For example, at least some of the elastic members (e.g., the lower elastic members) may be disposed to exert the elastic force on the movement prevention structure 601 in the first direction (e.g., the +y-axis direction), and at least some of the others of the elastic members (e.g., the upper elastic members) may be disposed to exert the elastic force on the movement prevention structure 601 in the second direction (e.g., the -y-axis direction).

According to an embodiment, the reduction in the frictional force due to dimensional deviation (e.g., a negative deviation or positive deviation) of the interlocking gears 173 may be prevented by forming the movement prevention structure 601 and the inner shafts 133 and 134 separately and disposing the elastic members that exert elastic forces in different directions on the movement prevention structure 601. As described above, the first contact surface S1 including the first to fourth contact points may be constantly maintained regardless of the occurrence of dimensional deviation of the interlocking gears 173. In addition, the frictional force utilized to maintain the folding angle in the folding mode (e.g., a flex mode) of the electronic device 200 may be uniformly generated. In an embodiment, since the first contact surface S1 may be constantly maintained, the occurrence of assembly deviation or the occurrence of the joint of the interlocking gears 173, the arm members 410 and 420, and/or the first cam member 560 may be reduced. In addition, the durability and lifespan of the hinge assembly (e.g., the first hinge assembly 240) may be increased.

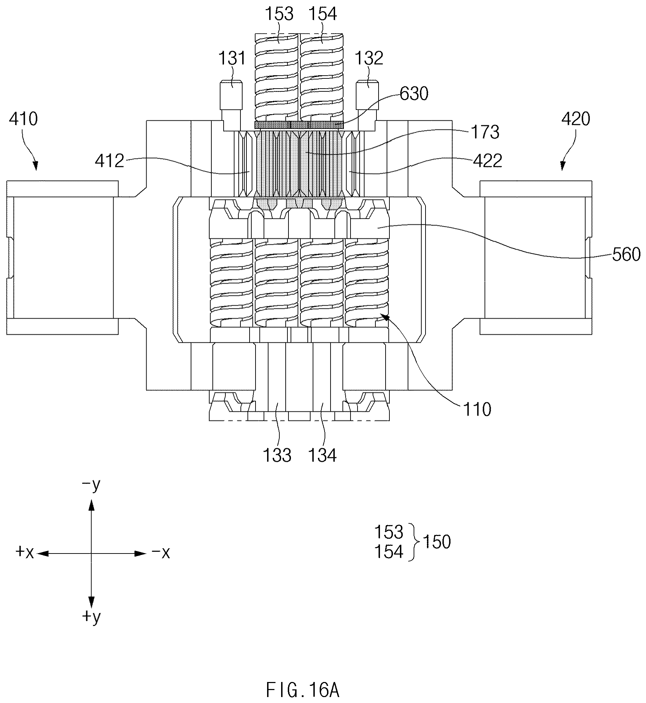

FIG. 16A is a view illustrating an example of a hinge assembly of an electronic device, according to an embodiment.

FIG. 16A is a view illustrating a modified embodiment of the first hinge assembly 240 illustrated in FIG. 5, in which the first hinge assembly 240 further includes a separate elastic body 150. For components overlapping the components in FIG. 5 among components in FIG. 16A, reference may be made to the description of the components in FIG. 5, and a repeated description thereof is omitted.

Referring to FIG. 16A, in an embodiment, a first hinge assembly (e.g., the first hinge assembly 240 in FIG. 5) may include a first elastic body 153 formed to surround at least a portion of the first inner shaft 133 and a second elastic body 154 formed to surround at least a portion of the second inner shaft 134. For example, the first elastic body 153 and the second elastic body 154 may surround the first inner shaft 133 and the second inner shaft 134, respectively, which are positioned on the second gear bracket 630 (e.g., in the -y-axis direction).

In an embodiment, the first elastic body 153 and the second elastic body 154 may be disposed to press the second gear bracket 630 in a first direction (e.g., the +y-axis direction). For example, the first elastic body 153 and the second elastic body 154 may be disposed so that a certain level of compression is maintained between the second gear bracket 630 and another component (e.g., the fixing bracket 530 in FIG. 5) to which the shafts 131, 132, 133, and 134 are coupled. The second gear bracket 630 pressed by the first elastic body 153 and the second elastic body 154 may support the interlocking gears 173 in the +y-axis direction. The interlocking gears 173 may be moved in the +y-axis direction by the elastic force transmitted from the first elastic body 153 and the second elastic body 154.

Alternatively, in an embodiment, the first elastic body 153 and the second elastic body 154 may be disposed on upper surfaces (e.g., the surfaces facing the -y-axis) of the interlocking gears 173. The elastic force may be directly transmitted from the first elastic body 153 and the second elastic body 154 to the interlocking gears 173, and the contact between the interlocking gears 173 and the first cam member 560 may be maintained by the elastic force.

When the interlocking gears 173 are formed to be smaller than in a normal state (e.g., have a negative deviation), the elastic force of the elastic body 150 in the +y-axis direction may be transmitted to the second gear bracket 630 or the interlocking gears 173. The interlocking gears 173 may be moved in the +y-axis direction, and the contact between the cam structures of the interlocking gears 173 and the first cam portions of the first cam member 560 may be maintained.

When the interlocking gears 173 are formed to be greater than in the normal state (e.g., have a positive deviation), the first cam member 560 may be pushed in the +y-axis direction, and an elastic force in the -y-axis direction may be generated due to the compression of the first elastic assembly 110. The elastic force in the +y-axis direction transmitted from the elastic body 150 may be offset by the elastic force in the -y-axis direction transmitted from the first elastic assembly 110. For example, only a net force that remains after the elastic force of the elastic body 150 is offset from the elastic force of the first elastic assembly 110 may be applied to the interlocking gears 173. The interlocking gears 173 may be moved in the -y-axis direction by the net force, and the contact between the second arm portion 412 and the fourth arm portion 422 and the first cam member 560 may be maintained.

In an embodiment, through the elastic body 150 and the first elastic assembly 110, the contact of the cam structure of the first arm member 410, the cam structure of the second arm member 420, the cam structure of the interlocking gears 173, and the first cam portions of the first cam member 560 and the friction due to the contact may be constantly maintained.

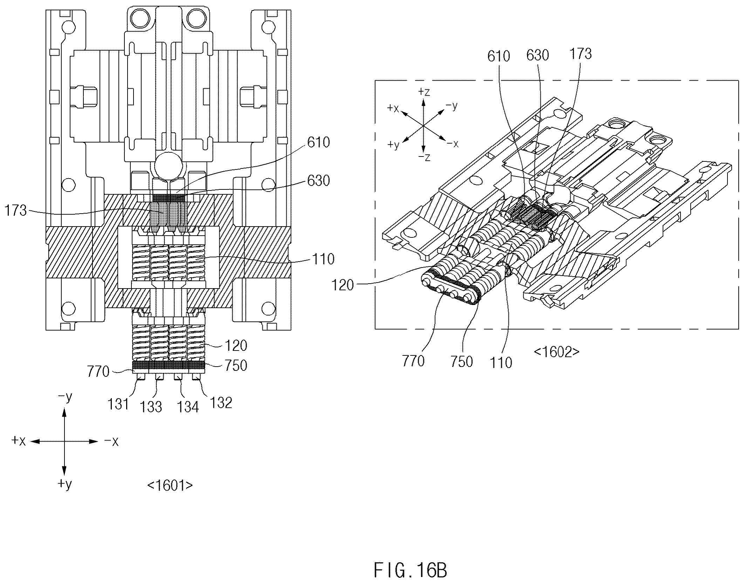

FIG. 16B is a view illustrating an example of a hinge assembly of an electronic device, according to an embodiment.

FIG. 16B is a view illustrating a modified embodiment of the first hinge assembly 240 illustrated in FIG. 5, in which the shafts 131, 132, 133, and 134 of the first hinge assembly 240 are configured to integrally move. For components overlapping the components in FIG. 5 among components in FIG. 16B, reference may be made to the description of the components in FIG. 5, and a repeated description thereof is omitted. Reference number <1601> in FIG. 16B represents a view of the first hinge assembly 240 when viewed from the +z-axis, and reference number <1602> represents a view of the first hinge assembly 240 when viewed obliquely from the +z-axis.

Referring to FIG. 16B, in an embodiment, a first hinge assembly (e.g., the first hinge assembly 240 in FIG. 5) may include the first gear bracket 610, the second gear bracket 630, a third shaft bracket 750, and a first fixing member 770. In an embodiment, the third shaft bracket 750 may be seated on at least some of the shafts 131, 132, 133, and 134. For example, in the shafts, a stepped portion (e.g., the second stepped portion 1333 in FIG. 12) that may engage with the third shaft bracket 750 may be formed. The third shaft bracket 750 may include insertion holes through which the first outer shaft 131, the second outer shaft 132, the first inner shaft 133, and the second inner shaft 134 pass, respectively. The first fixing member 770 may be coupled to the shafts together with the third shaft bracket 750. For example, the first fixing member 770 may be coupled to the stepped portions formed on the shafts. As the third shaft bracket 750 is coupled not only to the inner shafts 133 and 134 but also to the outer shafts 131 and 132, the elastic force transmitted from the first elastic assembly 110 or the second elastic assembly 120 may be transmitted to the inner shafts 133 and 134 and the outer shafts 131 and 132 through the third shaft bracket 750.

The shafts may be integrally moved so that the contact between cam structures (e.g., the cam structure of the interlocking gears 173 and the cam structure of the arm members 410 and 420) and the first cam member 560 may be maintained. For example, when the interlocking gears 173 are formed to be smaller than in the normal state (e.g., have a negative deviation), the third shaft bracket 750 and the shafts may be integrally moved in the first direction by the elastic force of the second elastic assembly 120 in the first direction (e.g., in the +y-axis direction). For example, when the interlocking gears 173 are formed to be greater than in the normal state (e.g., have a positive deviation), the elastic force in the second direction (e.g., in the -y-axis direction) transmitted from the first elastic assembly 110 may be offset by the elastic force in the first direction transmitted from the second elastic assembly 120, and the third shaft bracket 750 and the shafts may be integrally moved in the second direction by the remaining net force.

In an embodiment, the shafts may be movably connected to a bracket (e.g., the first shaft bracket 270 in FIG. 3) of the first hinge assembly 240 that is coupled to a hinge housing (e.g., the hinge housing 250 in FIG. 2) so that the shafts may be integrally moved. For example, the hole 537 for coupling to the hinge housing 250 of the first shaft bracket (e.g., the first shaft bracket 270 in FIG. 3) may be omitted. For example, the first shaft bracket 270 may be formed separately from the hinge housing 250.

The shape of the movement prevention structure 601 according to an embodiment disclosed herein is not limited to the above-described content, and at least some of the components may be modified or omitted. For example, the second gear bracket 630 may be omitted in the movement prevention structure 601. For example, a structure that engages with (e.g., is fixed to) the interlocking gears 173 may be formed on the first inner shaft 133 and the second inner shaft 134, so that the second gear bracket 630 may be replaced. For example, the first inner shaft 133 may include a first step structure formed so that the first interlocking gear 1731 is supported in the first direction (e.g., the +y-axis direction). The second inner shaft 134 may include a second step structure formed so that the second interlocking gear 1732 is supported in the first direction (e.g., the +y-axis direction). For example, the first step structure and the second step structure may be formed in a shape identical to or similar to the first stepped portion 1331 or the second stepped portion 1333 so that the interlocking gears 173 may be seated. Since the inner shafts 133 and 134 are formed to engage with the interlocking gears 173, the lower elastic force of the lower elastic member transmitted to the second shaft bracket 650 may be transmitted to the interlocking gears 173.

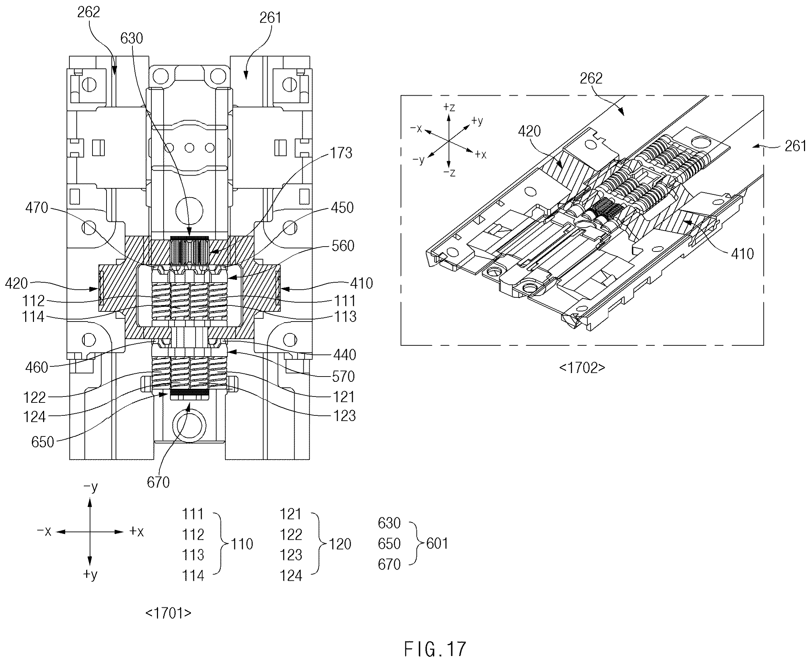

Alternatively, for example, the second shaft bracket 650 may be omitted from the movement prevention structure 601. For example, the fixing member 670 may be disposed to come into contact with the lower elastic member, so that the second shaft bracket 650 may be replaced. For example, the fixing member 670 may be formed with a seating portion on which a lower elastic member may be seated. The fixing member 670 is disposed to be pressed by the lower elastic member, and at least a portion thereof may be fixed to the inner shafts 133 and 134, so that the lower elastic force generated from the lower elastic member may be transmitted to the inner shafts. FIG. 17 is a view illustrating an example of a hinge assembly in an unfolded state of an electronic device, according to an embodiment.

Reference number <1701> in FIG. 17 represents a view of a hinge assembly (e.g., the first hinge assembly 240 in FIG. 5) in an unfolded state when viewed from the -z-axis, and reference number <1702> represents a view of the hinge assembly 240 in an unfolded state when viewed obliquely from the +z-axis.

Referring to FIGS. 1A to 17, in an embodiment, the electronic device 200 may have an unfolded state. When the electronic device 200 is in the unfolded state (e.g., when the first display 230 is in the unfolded state, or when the first housing 210 and the second housing 220 are in the unfolded state), the first arm member 410 coupled to the first wing plate 261 may be disposed symmetrically to the second arm member 420 coupled to the second wing plate 262 with respect to the center of the electronic device 200. The end of the first arm member 410 in the +x-axis direction and the end of the second arm member 420 in the -x-axis direction may be spaced apart by a first distance (e.g., the longest distance).

According to an embodiment, when the electronic device 200 is in the unfolded state, a portion of the first-first cam structure 440 of the first arm member 410 and a portion of the second cam member 570 may come into contact. The top portion (e.g., the portion facing the +y-axis) of the first-first cam structure 440 and the top portion (e.g., the portion facing the -y-axis) of the second cam member 570 may be disposed spaced apart from each other. An empty space (e.g., an interval) may be formed between the top portion of the first-first cam structure 440 and the top portion of the second cam member 570.

According to an embodiment, when the electronic device 200 is in the unfolded state, a portion of the first-second cam structure 450 of the first arm member 410 and a portion of the first cam member 560 may come into contact. The top portion (e.g., the portion facing the +y-axis) of the first-second cam structure 450 and the top portion (e.g., the portion facing the -y-axis) of the first cam member 560 may be disposed spaced apart from each other. An empty space (e.g., an interval) may be formed between a top portion of the first-second cam structure 450 and a top portion of the first cam member 560.

According to an embodiment, when the electronic device 200 is in the unfolded state, the second-first elastic member 121, the second-second elastic member 122, the second-third elastic member 123, and the second-fourth elastic member 124 may act to push the second cam member 570 in one direction (e.g., in the -y-axis direction). The second-first elastic member 121, the second-second elastic member 122, the second-third elastic member 123, and the second-fourth elastic member 124 may exert the elastic force to push the second cam member 570 toward the first-first cam structure 440 and the second-first cam structure 460. As a portion of the second cam member 570 comes into contact with a portion of the first-first cam structure 440 and the second-first cam structure 460 due to an elastic force, a first cam frictional force may be generated.

According to an embodiment, when the electronic device 200 is in the unfolded state, the first-first elastic member 111, the first-second elastic member 112, the first-third elastic member 113, and the first-fourth elastic member 114 may act to push the first cam member 560 in one direction (e.g., in the -y-axis direction). The first-first elastic member 111, the first-second elastic member 112, the first-third elastic member 113, and the first-fourth elastic member 114 may exert the elastic force to push the first cam member 560 toward the first-second cam structure 450 and the second-second cam structure 470. As the portion of the first cam member 560 comes into contact with the portion of the first-second cam structure 450 and the second-second cam structure 470 due to an elastic force, a second cam frictional force may be generated. According to an embodiment, the electronic device 200 may perform an unfolding operation of the electronic device 200 with less force by using a first cam frictional force and a second cam frictional force.

In the unfolded state of the electronic device 200, the movement prevention structure 601 including the second gear bracket 630, the second shaft bracket 650, and the fixing member 670 may be configured to be moved together with a first inner shaft (e.g., the first inner shaft 133 in FIG. 5) and a second inner shaft (e.g., the second inner shaft 134 in FIG. 5) so that the first-second cam structure 450 and the second-second cam structure 470 are maintained in contact with the first cam member 560. For example, the interlocking gears 173 may be moved in the first direction (e.g., the +y-axis direction) or the second direction (e.g., the -y-axis direction) by the movement of the movement prevention structure 601 and the inner shafts 133 and 134. The interlocking gears 173 may maintain the contact with the first cam member 560 even after being moved in the first direction or the second direction. By further using a third cam frictional force generated by the contact between the cam structures (e.g., the third cam structure 1791 and the fourth cam structure 1792 in FIG. 13) of the first cam member 560 and the interlocking gears 173, the folding angle maintenance and unfolding operation of the electronic device 200 may be easily performed.

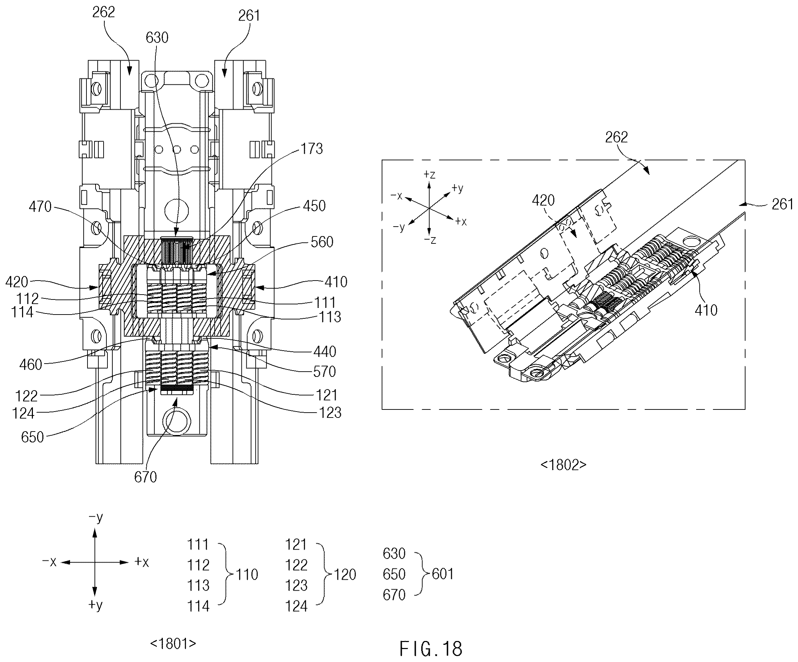

FIG. 18 is a view illustrating an example of the hinge assembly in a partially folded state of the electronic device, according to an embodiment.

Reference number <1801> in FIG. 18 represents a partially folded state of a hinge assembly (e.g., the first hinge assembly 240 in FIG. 5) as viewed from the - z-axis, and reference number <1802> represents a partially folded state of the hinge assembly 240 as viewed obliquely from the +z-axis.

Referring to FIGS. 1A to 18, in an embodiment, when an external pressure is applied to the electronic device 200 in an unfolded state, the electronic device 200 may be converted to a folded state of a first angle. For example, the first angle may include any angle between 60 degrees and 120 degrees. In the folded state of the first angle, the end of the first arm member 410 in the +x-axis direction and the end of the second arm member 420 in the -x-axis direction may be spaced apart by a second distance that is shorter than the first distance (e.g., the longest distance).

When the electronic device 200 is in the folded state of the first angle, the top portions (e.g., the portions facing the +y-axis) of the cam structures 440 and 450 of the first arm member 410 and the top portions (e.g., the portions facing the -y-axis) of the cam members 560 and 570 may come into contact. While the electronic device 200 changes from the unfolded state to the folded state of the first angle, the contact area between the top portions of the cam structures 440 and 450 of the first arm member 410 and the top portions of the cam member 560 and 570 may be gradually increased. For example, when the electronic device 200 is in the folded state of the first angle, the contact area between the top portions of the cam structures 440 and 450 of the first arm member 410 and the top portions of the cam members 560 and 570 may be maximized.

According to an embodiment, when the electronic device 200 is in the folded state of the first angle, at least a portion of a top portion of the second cam member 570 may come into contact with at least a portion of the top portion of the second cam structure 470 by the elastic force of each of the second-first elastic member 121, the second-second elastic member 122, the second-third elastic member 123, and the second-fourth elastic member 124. The first cam frictional force may be generated between at least the portion of the top portion of the second cam member 570 and at least the portion of the top portion of the first-first cam structure 440. As the contact area between the top portion of the first-first cam structure 440 and the top portion of the second cam member 570 is increased in the folded state of the first angle, the first cam frictional force may be increased. The first cam frictional force in the folded state of the first angle may have a larger magnitude than the first cam frictional force in the unfolded state.

According to an embodiment, when the electronic device 200 is in the folded state of the first angle, at least a portion of the top portion of the first cam member 560 may come into contact with at least a portion of the top portion of the first-second cam structure 450 by the elastic force of each of the first-first elastic member 111, the first-second elastic member 112, the first-third elastic member 113, and the first-fourth elastic member 114. The second cam frictional force may be generated between at least the portion of the top portion of the first cam member 560 and at least the portion of the top portion of the first-second cam structure 450. As the contact area between the top portion of the first-second cam structure 450 and the top portion of the first cam member 560 is increased in the folded state of the first angle, the second cam frictional force may be increased. The second cam frictional force in the folded state of the first angle may have a larger magnitude than the second cam frictional force in the unfolded state.

According to an embodiment, the electronic device 200 in the folded state of the first angle may maintain a mounting angle with a greater force by using the first cam frictional force and/or the second cam frictional force increased compared to the unfolded state. The electronic device 200 in the folded state of the first angle may provide a stable mounting angle by using a higher frictional force than when in the unfolded state.

In the folded state of the first angle of the electronic device 200, the movement prevention structure 601 including the second gear bracket 630, the second shaft bracket 650, and the fixing member 670 may maintain the position set so that the first cam member 560 and the cam structures of the interlocking gears 173 (e.g., the third cam structure 1791 and the fourth cam structure 1792 in FIG. 13) are in contact. By further using the third cam frictional force generated by the contact of the cam structures 1791 and 1792 of the first cam member 560 and the interlocking gears 173, the folding angle (e.g., the first angle) of the electronic device 200 may be stably maintained. The hinge assembly may support stable retention of various folding angles, for example within a range of approximately 60 degrees to 120 degrees. The precise angular range may vary depending on the cam geometry, elastic force, and bracket design.

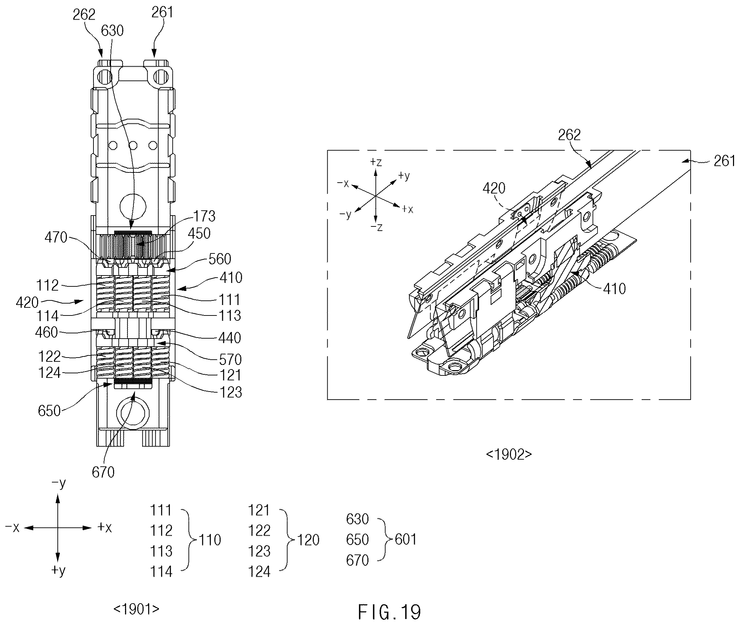

FIG. 19 is a view illustrating an example of a hinge assembly in a fully folded state of an electronic device, according to an embodiment.

Reference number <1901> in FIG. 19 represents a view of a hinge assembly (e.g., the first hinge assembly 240 in FIG. 5) in a fully folded state as viewed from the -z-axis, and reference number <1902> represents a view of the hinge assembly 240 in the fully folded state as viewed obliquely from the +z-axis.

Referring to FIGS. 1A to 19, in an embodiment, when an external pressure is applied to the electronic device 200 in the folded state of the first angle, the electronic device 200 may be converted to the folded state. In the folded state, the end of the first arm member 410 in the +x-axis direction and the end of the second arm member 420 in the -x-axis direction may be spaced apart by a third distance (e.g., the shortest distance) shorter than the second distance.

When the electronic device 200 is in the folded state, a portion of the first-first cam structure 440 of the first arm member 410 and a portion of the second cam member 570 may come into contact. While the electronic device 200 changes from the folded state of the first angle to the folded state, the contact area between the top portions (e.g., the portions facing the y-axis) of the cam structures 440 and 450 of the first arm member 410 and the top portions of the cam members 560 and 570 may be gradually decreased.

According to an embodiment, when the electronic device 200 is in the folded state, the portion of the second cam member 570 may come into contact with at least the portion of the first-first cam structure 440 by the elastic force of each of the second-first elastic member 121, the second-second elastic member 122, the second-third elastic member 123, and the second-fourth elastic member 124. The first cam frictional force may be generated between at least the portion of the second cam member 570 and at least the portion of the first-first cam structure 440. As the contact area between the top portion of the first-first cam structure 440 and the top portion of the second cam member 570 decreases while changing from the folded state of the first angle to the folded state, the first cam frictional force may be reduced. The first cam frictional force in the folded state may have a smaller magnitude than the first cam frictional force in the folded state of the first angle.

According to an embodiment, when the electronic device 200 is in the folded state, a portion of the first cam member 560 may come into contact with a portion of the first-second cam structure 450 by the elastic force of each of the first-first elastic member 111, the first-second elastic member 112, the first-third elastic member 113, and the first-fourth elastic member 114. The second cam frictional force may be generated between a portion of the first cam member 560 and a portion of the first-second cam structure 450. As the contact area between the top portion of the first-second cam structure 450 and the top portion of the first cam member 560 decreases while changing from the folded state of the first angle to the folded state, the second cam frictional force may be reduced. The second cam frictional force in the folded state may have a smaller magnitude than the second cam frictional force in the folded state of the first angle.

In the folded state of the electronic device 200, the movement prevention structure 601 including the second gear bracket 630, the second shaft bracket 650, and the fixing member 670 may maintain the position set so that the first cam member 560 and the cam structures of the interlocking gears 173 (e.g., the third cam structure 1791 and the fourth cam structure 1792 in FIG. 13) are in contact. The third cam frictional force may be generated on the contact surface of the cam structures 1791 and 1792 of the first cam member 560 and the interlocking gears 173.

A hinge assembly 240, 240-1 according to an embodiment of the disclosure may include a first arm member 410 fastened to a first shaft 131 extending in a first direction and including a first main gear 171 including a first cam structure 450, a second arm member 420 fastened to a second shaft 132 extending in the first direction and including a second main gear 172 including a second cam structure 470, a first interlocking gear 1731 engaging with the first main gear 171 and including a third cam structure 1791, a second interlocking gear 1732 engaging with the second main gear 172 and including a fourth cam structure 1792, a third shaft 133 coupled to the first interlocking gear 1731 and formed parallel to the first shaft 131, a fourth shaft 134 coupled to the second interlocking gear 1732 and formed parallel to the second shaft 132, a first cam member 560 at least partially penetrated by the third shaft 133 and the fourth shaft 134 and disposed in the first direction in the first interlocking gear 1731 and the second interlocking gear 1732 to face the third cam structure 1791 and the fourth cam structure 1792, at least one bracket 610, 630, 650, 270 coupled to at least one of the first shaft 131, the second shaft 132, the third shaft 133, and the fourth shaft 134, a first elastic assembly 110 configured to press the first cam member 560 in a second direction opposite to the first direction so that contact between the first cam member 560 and the third cam structure 1791 and contact between the first cam member 560 and the fourth cam structure 1792 are maintained, and a second elastic assembly 120 configured to press the third shaft 133 and the fourth shaft 134 in the first direction so that contact between the first cam member 560 and the third cam structure 1791 and contact between the first cam member 560 and the fourth cam structure 1792 are maintained. In some implementations, instead of a single cam member shared between the third and fourth cam structures, separate cam members may be provided for each side. A first cam member may engage the third cam structure, and a second cam member may engage the fourth cam structure, both optionally biased by respective elastic members. The first arm member 410 and the first main gear 171 including the first cam structure 450 may contribute to transmitting rotational motion to the hinge and controlling torque generation. The first cam structure 450 cooperates with the first cam member to provide resistance at predetermined folding angles, thus allowing the hinge to stably maintain intermediate positions during the folding motion. Likewise, the second arm member 420 and the second main gear 172 including the second cam structure 470 operate in tandem with the first gear set to enable symmetrical folding, contributing to balanced torque application across the hinge structure. The first interlocking gear 1731, with its third cam structure 1791, not only transmits torque between the main gears but also provides a detent function in cooperation with the first cam member, allowing the hinge to retain specific angular positions and improve the overall durability of the torque-generating mechanism. Similarly, the second interlocking gear 1732 with the fourth cam structure 1792 mirrors the behavior of the first interlocking gear 1731, ensuring consistent resistance across both sides of the hinge and improving folding symmetry and torque uniformity. The third shaft 133 may structurally support and align the first interlocking gear 1731. By being coupled thereto and extending in parallel to the outer shafts, it may ensure coaxial alignment and stable gear engagement, thereby minimizing wobble and mechanical backlash. The fourth shaft 134 may provide a mirrored function for the opposite side of the hinge and ensures the structural integrity and synchronous operation of the second interlocking gear 1732. The first cam member 560 is operatively coupled via the third and fourth shafts and faces the third and fourth cam structures. This configuration may allow the cam member to smoothly translate axial force from the elastic assemblies into frictional engagement, resulting in improved hinge stability at various angles of use. The brackets 610, 630, 650, and 270 are configured to precisely constrain the axial position of the respective shafts, preventing unintended movement and preserving alignment of the gear and cam components. This may contribute to maintaining the torque characteristics and preventing wear during repeated folding operations. The first elastic assembly 110 presses the first cam member 560 in the second direction (e.g., -y axis) to ensure persistent engagement with the third and fourth cam structures. This may improve the positional retention of the hinge at specific angular intervals, particularly in flex mode, and enhances durability by compensating for wear over time. Additionally, the second elastic assembly 120 applies a directional force on the third and fourth shafts to reinforce contact pressure at the cam interface. This dual-force configuration may ensure that both the cam member and the gears remain firmly engaged even during dimensional deviations or vibrations, reducing torque inconsistency and improving long-term mechanical stability.

According to an embodiment disclosed herein, the at least one bracket 610, 630, 650, 270 may include a first gear bracket 610 in which a first insertion hole into which one end of the first shaft 131 in the first direction is inserted and a second insertion hole into which one end of the second shaft 132 in the first direction is inserted are formed and a second gear bracket 630 in which a third insertion hole 634 into which one end of the third shaft 133 in the first direction is inserted and a fourth insertion hole 635 into which one end of the fourth shaft 134 in the first direction is inserted are formed. The first gear bracket 610 and second gear bracket 630 may provide fixed support for the first and second shafts as well as the third and fourth shafts, respectively. By accurately defining insertion holes for the shaft ends, these gear brackets may ensure precise alignment and stable coupling between the shaft members and the hinge frame, thereby contributing to improved rotational accuracy and mechanical durability during repeated folding actions.

According to an embodiment disclosed herein, the at least one bracket 610, 630, 650, 270 may further include a first shaft bracket 270 in which a fifth insertion hole into which the other end of the first shaft 131 in the second direction is inserted and a sixth insertion hole into which the other end of the second shaft 132 in the second direction is inserted are formed and a second shaft bracket 650 in which a seventh insertion hole 654 into which the other end of the third shaft 133 in the second direction is inserted and an eighth insertion hole 655 into which the other end of the fourth shaft 134 in the second direction is inserted are formed. One or more of the brackets 610, 630, 650, 270 may be provided independently. For instance, the gear brackets 610, 630 may be provided without the shaft brackets 270, 650, or vice versa. Each bracket may function independently to support at least one shaft, and need not be implemented in all configurations. The shaft brackets 270 and 650 may serve to anchor the opposite ends of the respective shafts, ensuring axial fixation and preventing lateral displacement. This double-ended bracket structure may enhance the rigidity of the hinge assembly, especially under external force, thereby reducing shaft wobbling and improving hinge longevity.

According to an embodiment disclosed herein, the second gear bracket 630 may come into contact with surfaces of the first interlocking gear 1731 and the second interlocking gear 1732 facing the second direction. In some embodiments, the second gear bracket 630 may be spaced apart from the interlocking gears rather than in direct contact, allowing relative movement or tolerance absorption during operation. By enabling the second gear bracket 630 to contact the upper surfaces of the interlocking gears, the hinge assembly may minimize gear tilt or axial drift. This contact structure may also support torque balance between left and right hinge sides, leading to more uniform folding characteristics across the rotation range.

According to an embodiment disclosed herein, the second elastic assembly 120 may be disposed to come into contact with a surface of the second shaft bracket 650 facing the second direction. Positioning the second elastic assembly 120 to contact the second shaft bracket 650 may allow effective transmission of elastic force into the shafts from a fixed structure. This may help maintain pressure between the cam structures and the cam member, even when mechanical tolerances vary or thermal expansion occurs.

According to an embodiment disclosed herein, the first elastic assembly 110 may include a first elastic member 111 formed to surround at least a portion of the first shaft 131, a second elastic member 112 formed to surround at least a portion of the second shaft 132, a third elastic member 113 formed to surround at least a portion of the third shaft 133, and a fourth elastic member 114 formed to surround at least a portion of the fourth shaft 134. Subdividing the first elastic assembly 110 into individual elastic members 111-114 may ensure that force is independently applied to each shaft. This localized force distribution may reduce asymmetric wear on the cam member and may prevent misalignment of the rotational axis, especially during partial folding states.

According to an embodiment disclosed herein, the second elastic assembly 120 may include elastic members 123, 124 formed to surround at least a portion of each of the third shaft 133 and the fourth shaft 134. Additionally, only one of the elastic members (e.g., 123 or 124) may be provided, depending on the design preference. Similarly, the first elastic assembly 110 may include fewer than four elastic members 111-114, and each may be optionally included or omitted. The elastic members may be formed from materials such as metal springs, rubber elastomers, or plastic composites. Shapes may vary and include wave washers, foam pads, or torsion springs, depending on the required force profile. The elastic members 123 and 124 surrounding the third and fourth shafts may allow the second elastic assembly to apply balanced axial force. This may help keep the shafts pressed against the cam member in a direction that compensates for movement or vibration, thereby stabilizing hinge behavior across folding states.

According to an embodiment disclosed herein, the foldable electronic device may further include a fixing member 670 configured to fix the second shaft bracket 650 to the third shaft 133 and the fourth shaft 134. The fixing member 670 may fix the second shaft bracket 650 to the third and fourth shafts to prevent independent movement of the shafts relative to the bracket. This may contribute to the structural integrity of the movement prevention structure and may improve the accuracy of torque delivery between the elastic components and the cam interface.

According to an embodiment disclosed herein, a first stepped portion 1331 on which the second gear bracket 630 is seated may be formed at the one end of the third shaft 133 and the one end of the fourth shaft 134. The stepped portions 1331 formed on the third and fourth shafts may provide seating surfaces for the second gear bracket 630. These surfaces may ensure consistent contact pressure and may allow for precise vertical positioning of the bracket, thereby preventing mechanical slippage during angular transition of the hinge.

According to an embodiment disclosed herein, a second stepped portion 1333 on which the second shaft bracket 650 is seated may be formed at the other end of the third shaft 133 and the other end of the fourth shaft 134. The second stepped portions 1333 may ensure secure seating of the second shaft bracket 650, improving bracket fixation. Additionally, the dual-diameter design of the first stepped portion 1331 may enable the shaft to be partially inserted into a hole with a tighter fit, allowing for both axial retention and flush bracket mounting, which may contribute to robust hinge support.

According to an embodiment disclosed herein, the first stepped portion 1331 may include a first portion at least partially inserted into the third insertion hole 634 and formed with a first diameter and a second portion formed to face a surface of the second gear bracket 630 in the second direction and formed with a second diameter greater than the first diameter. Alternatively, the shaft ends may include other axial seating or engagement structures such as stepped recesses, flanges, or compression notches instead of strict stepped diameter portions. The second stepped portions 1333 may ensure secure seating of the second shaft bracket 650, improving bracket fixation. Additionally, the dual-diameter design of the first stepped portion 1331 may enable the shaft to be partially inserted into a hole with a tighter fit, allowing for both axial retention and flush bracket mounting, which may contribute to robust hinge support.

According to an embodiment disclosed herein, the foldable electronic device may further include a fixing member 670 that is at least partially in contact with the second elastic assembly 120 and is coupled to the third shaft 133 and the fourth shaft 134, and an elastic force generated from the second elastic assembly 120 may be transmitted to the third shaft 133 and the fourth shaft 134 through the fixing member 670. The fixing member 670, when placed in contact with the second elastic assembly, may enable direct transfer of elastic force to the shafts. This structure may support sustained cam contact force even under repetitive motion or assembly variations, thereby improving torque stability during folding and unfolding operations.

According to an embodiment disclosed herein, a first step structure on which the first interlocking gear 1731 is seated may be formed at one end of the third shaft 133 in the first direction, and a second step structure on which the second interlocking gear 1732 is seated may be formed at one end of the fourth shaft 134 in the first direction. The step structures on the third and fourth shafts may serve as seating bases for the interlocking gears, positioning them accurately in the axial direction. This arrangement may reduce axial drift of the gears under load and may preserve smooth gear engagement throughout the hinge rotation.

According to an embodiment disclosed herein, the second elastic assembly 120 may include a first elastic body 153 formed to surround at least a portion of the third shaft 133 and a second elastic body 154 formed to surround at least a portion of the fourth shaft 134, and the first elastic body 153 and the second elastic body 154 may be disposed to face a surface of the second gear bracket 630 facing the second direction. By providing discrete elastic bodies 153 and 154 around the third and fourth shafts, and aligning them with the gear bracket surface, consistent pressing force may be achieved on both sides of the hinge. This may contribute to reliable torque balance and long-term hinge functionality.

According to an embodiment disclosed herein, an elastic force transmitted from the first elastic assembly 110 to the first cam member 560 may be set to be greater than an elastic force transmitted from the second elastic assembly 120 to the third shaft 133 and the fourth shaft 134. Alternatively, the elastic force applied by the second elastic assembly 120 may be equal to or greater than that of the first elastic assembly 110, depending on the desired hinge stiffness or torque profile. By setting the force from the first elastic assembly to be greater than that of the second, the design may prioritize stable engagement of the cam member with the cam structures. This may ensure that positional detent functions are consistently achieved even when opposing axial forces act on the shafts, thereby preserving user experience in multiple folding angles.

A foldable electronic device 200 according to an embodiment of the disclosure may include at least one hinge assembly 240, 240-1, a first housing 210 and a second housing 220 formed to be foldable around the at least one hinge assembly 240, 240-1, and the at least one hinge assembly 240, 240-1 including a first arm member 410 fastened to a first shaft 131 extending in a first direction and including a first main gear 171 including a first cam structure 450, a second arm member 420 fastened to a second shaft 132 extending in the first direction and including a second main gear 172 including a second cam structure 470, a first interlocking gear 1731 engaging with the first main gear 171 and including a third cam structure 1791, a second interlocking gear 1732 engaging with the second main gear 172 and including a fourth cam structure 1792, a third shaft 133 coupled to the first interlocking gear 1731 and formed parallel to the first shaft 131, a fourth shaft 134 coupled to the second interlocking gear 1732 and formed parallel to the second shaft 132, a first cam member 560 at least partially penetrated by the third shaft 133 and the fourth shaft 134 and disposed in the first direction in the first interlocking gear 1731 and the second interlocking gear 1732 to face the third cam structure 1791 and the fourth cam structure 1792, at least one bracket 610, 630, 650, 270 coupled to at least one of the first shaft 131, the second shaft 132, the third shaft 133, and the fourth shaft 134, a first elastic assembly 110 configured to press the first cam member 560 in a second direction opposite to the first direction so that contact between the first cam member 560 and the third cam structure 1791 and contact between the first cam member 560 and the fourth cam structure 1792 are maintained, and a second elastic assembly 120 configured to press the third shaft 133 and the fourth shaft 134 in the first direction so that contact between the first cam member 560 and the third cam structure 1791 and contact between the first cam member 560 and the fourth cam structure 1792 are maintained.

According to an embodiment disclosed herein, the at least one bracket 610, 630, 650, 270 may include a first gear bracket 610 in which a first insertion hole into which one end of the first shaft 131 in the first direction is inserted and a second insertion hole into which one end of the second shaft 132 in the first direction is inserted are formed, and a second gear bracket 630 in which a third insertion hole 634 into which one end of the third shaft 133 in the first direction is inserted and a fourth insertion hole 635 into which one end of the fourth shaft 134 in the first direction is inserted are formed.

According to an embodiment disclosed herein, the at least one bracket 610, 630, 650, 270 may further include a first shaft bracket 270 in which a fifth insertion hole into which the other end of the first shaft 131 in the second direction is inserted and a sixth insertion hole into which the other end of the second shaft 132 in the second direction is inserted are formed, and a second shaft bracket 650 in which a seventh insertion hole 654 into which the other end of the third shaft 133 in the second direction is inserted and an eighth insertion hole 655 into which the other end of the fourth shaft 134 in the second direction is inserted are formed.

According to an embodiment disclosed herein, the second gear bracket 630 may be in contact with the surfaces of the first interlocking gear 1731 and the second interlocking gear 1732 facing the second direction.

According to an embodiment disclosed herein, the second elastic assembly 120 may be disposed to be in contact with the surface of the second shaft bracket 650 facing the second direction.

## Claims

1. A hinge assembly (240, 240-1) comprising:
a first arm member (410) fastened to a first shaft (131) extending in a first direction and including a first main gear (171) including a first cam structure (450);
a second arm member (420) fastened to a second shaft (132) extending in the first direction and including a second main gear (172) including a second cam structure (470);
a first interlocking gear (1731) engaging with the first main gear (171) and including a third cam structure (1791);
a second interlocking gear (1732) engaging with the second main gear (172) and including a fourth cam structure (1792);
a third shaft (133) coupled to the first interlocking gear (1731) and formed parallel to the first shaft (131);
a fourth shaft (134) coupled to the second interlocking gear (1732) and formed parallel to the second shaft (132);
a first cam member (560) at least partially penetrated by the third shaft (133) and the fourth shaft (134) and disposed in the first direction in the first interlocking gear (1731) and the second interlocking gear (1732) to face the third cam structure (1791) and the fourth cam structure (1792);
at least one bracket (610, 630, 650, 270) coupled to at least one of the first shaft (131), the second shaft (132), the third shaft (133), and the fourth shaft (134);
a first elastic assembly (110) configured to press the first cam member (560) in a second direction opposite to the first direction so that contact between the first cam member (560) and the third cam structure (1791) and contact between the first cam member (560) and the fourth cam structure (1792) are maintained; and
a second elastic assembly (120) configured to press the third shaft (133) and the fourth shaft (134) in the first direction so that contact between the first cam member (560) and the third cam structure (1791) and contact between the first cam member (560) and the fourth cam structure (1792) are maintained.

2. The hinge assembly of claim 1, wherein the at least one bracket (610, 630, 650, 270) includes:
a first gear bracket (610) in which a first insertion hole into which one end of the first shaft (131) in the first direction is inserted and a second insertion hole into which one end of the second shaft (132) in the first direction is inserted are formed; and
a second gear bracket (630) in which a third insertion hole (634) into which one end of the third shaft (133) in the first direction is inserted and a fourth insertion hole (635) into which one end of the fourth shaft (134) in the first direction is inserted are formed.

3. The hinge assembly of claim 1 or 2, wherein the at least one bracket (610, 630, 650, 270) further includes:
a first shaft bracket (270) in which a fifth insertion hole into which the other end of the first shaft (131) in the second direction is inserted and a sixth insertion hole into which the other end of the second shaft (132) in the second direction is inserted are formed; and
a second shaft bracket (650) in which a seventh insertion hole (654) into which the other end of the third shaft (133) in the second direction is inserted and an eighth insertion hole (655) into which the other end of the fourth shaft (134) in the second direction is inserted are formed.

4. The hinge assembly of claim 3, wherein the second gear bracket (630) comes into contact with surfaces of the first interlocking gear (1731) and the second interlocking gear (1732) facing the second direction.

5. The hinge assembly of claim 3 or 4, wherein the second elastic assembly (120) is disposed to come into contact with a surface of the second shaft bracket (650) facing the second direction.

6. The hinge assembly of any of claims 1 to 5, wherein the first elastic assembly (110) includes a first elastic member (111) formed to surround at least a portion of the first shaft (131), a second elastic member (112) formed to surround at least a portion of the second shaft (132), a third elastic member (113) formed to surround at least a portion of the third shaft (133), and a fourth elastic member (114) formed to surround at least a portion of the fourth shaft (134).

7. The hinge assembly of any of claims 1 to 6, wherein the second elastic assembly (120) includes elastic members (123, 124) formed to surround at least a portion of each of the third shaft (133) and the fourth shaft (134).

8. The hinge assembly of any of claims 3 to 5, further comprising a fixing member (670) configured to fix the second shaft bracket (650) to the third shaft (133) and the fourth shaft (134).

9. The hinge assembly of claim 1 or 2, wherein a first stepped portion (1331) on which the second gear bracket (630) is seated is formed at the one end of the third shaft (133) and the one end of the fourth shaft (134).

10. The hinge assembly of claim 9, wherein a second stepped portion (1333) on which the second shaft bracket (650) is seated is formed at the other end of the third shaft (133) and the other end of the fourth shaft (134); and/or
wherein the first stepped portion (1331) includes a first portion at least partially inserted into the third insertion hole (634) and formed with a first diameter and a second portion formed to face a surface of the second gear bracket (630) in the second direction and formed with a second diameter greater than the first diameter.

11. The hinge assembly of any of claims 1 to 10, further comprising a fixing member (670) that is at least partially in contact with the second elastic assembly (120) and is coupled to the third shaft (133) and the fourth shaft (134), and
wherein an elastic force generated from the second elastic assembly (120) is transmitted to the third shaft (133) and the fourth shaft (134) through the fixing member (670).

12. The hinge assembly of any of claims 1 to 11, wherein a first step structure on which the first interlocking gear (1731) is seated is formed at one end of the third shaft (133) in the first direction, and
wherein a second step structure on which the second interlocking gear (1732) is seated is formed at one end of the fourth shaft (134) in the first direction.

13. The hinge assembly of claim 2, wherein the second elastic assembly (120) includes a first elastic body (153) formed to surround at least a portion of the third shaft (133) and a second elastic body (154) formed to surround at least a portion of the fourth shaft (134), and
wherein the first elastic body (153) and the second elastic body (154) are disposed to face a surface of the second gear bracket (630) facing the second direction.

14. The hinge assembly of any of claims 1 to 13, wherein an elastic force transmitted from the first elastic assembly (110) to the first cam member (560) is set to be greater than an elastic force transmitted from the second elastic assembly (120) to the third shaft (133) and the fourth shaft (134).

15. A foldable electronic device (200) comprising:
at least one hinge assembly (240; 240-1) according to any of claims 1 to 14; and
a first housing (210) and a second housing (220) formed to be foldable around the at least one hinge assembly (240, 240-1).
